(19) Europäisches Patentamt
European Patent Office
Office européen des brevets

(11) **EP 3 976 323 B1**

(12) **EUROPEAN PATENT SPECIFICATION**

(45) Date of publication and mention
of the grant of the patent:
**09.10.2024 Bulletin 2024/41**

(21) Application number: **20742161.1**

(22) Date of filing: **28.05.2020**

(51) International Patent Classification (IPC):
**B25J 9/16** (2006.01)

(52) Cooperative Patent Classification (CPC):
**B25J 9/1646; B25J 9/1641;** G05B 2219/40189;
G05B 2219/40192; G05B 2219/40202;
G05B 2219/49142

(86) International application number:
**PCT/DK2020/050154**

(87) International publication number:
**WO 2020/239184 (03.12.2020 Gazette 2020/49)**

(54) **CONTROL OF A MULTIPURPOSE ROBOT ARM**

STEUERUNG EINES MEHRZWECK-ROBOTERARMS

CONTRÔLE D'UN BRAS DE ROBOT POLYVALENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2019 DK PA201900672
06.01.2020 DK PA202000007**

(43) Date of publication of application:
**06.04.2022 Bulletin 2022/14**

(73) Proprietor: **Universal Robots A/S
5260 Odense S (DK)**

(72) Inventors:
• **BECK, Anders Billesø
7000 Fredericia (DK)**
• **HANSEN, Jacob Gregers
6000 Kolding (DK)**
• **LEDDA, William
5000 Odense C (DK)**
• **STRØM-HANSEN, Theis
5260 Odense S (DK)**

(74) Representative: **Patentgruppen A/S
Aaboulevarden 31, 4th Floor
8000 Aarhus C (DK)**

(56) References cited:
EP-A2- 3 381 623          JP-A- 2001 293 638
US-A1- 2011 204 838     US-A1- 2016 161 937
US-A1- 2018 043 525     US-A1- 2018 043 549
US-B1- 6 477 445

**Description**

**FIELD OF THE INVENTION**

The present invention relates to a multipurpose robot arm comprising a plurality of robot joints connecting a robot base and a robot tool flange, where a robot controller is configured to control the robot arm according to a standard and an application specific mode of operation. Additionally, the present invention relates to a method of controlling the multipurpose robot arm according to a first, second and third layer of program code. Prior art document US2016/161937 disclose a robot having operation mode settings allowing the robot to operate in a second mode where the robot operates faster than in a first mode. Further, the robot can operate in a third vibration reduced mode. The operation mode setting unit is describe which change a correction factor which is multiplied by max acceleration, deceleration and servo gain. it is described that the three modes are defined as standard, fast and low-vibration modes and it is disclosedthat the selection of modes is made by an operator via an input unit or determined based on predetermined information and automatically performed in the robot controller. Prior art document EP3381623 disclose a control device for controlling a robot arm. The control device generates a second control signal based on reducing a frequency component in a first control signal. The control device controls the robot according to the second control signal when the controller receives an input indicating that the reduction in frequency component is needed otherwise the robot arm is operated according to the first control signal. Prior art document US2018043549 disclose a robot arm that can be controlled in different working modes. A change in working mode can be initiated by input from a sensor mounted on the robot arm sensing an object. Further, the working mode may also be changed when a sensor not mounted on the robot arm detect an object in a defined workspace area. In US2018043549 focus is to change mode of operation as a robot arm senses a person approaching the robot arm, which includes reducing e.g. speed of the robot arm according to a distance vs moving speed table.

**BACKGROUND OF THE INVENTION**

Robot arms comprising a plurality of robot joints and links where motors can move part of the robot arm in relation to each other are known in the field of robotics. Typically, the robot arm comprises a robot base which serves as a mounting base for the robot arm; and a robot tool flange where to various tools can be attached. A robot controller is configured to control the robot joints in order to move the robot tool flange in relation to the base. For instance, in order to instruct the robot arm to carry out a number of working instructions. The robot joints may be rotational robot joints configured to rotate parts of the robot arm in relation to each other, prismatic joints configured to translate parts of the robot arm in relation to each other and/or any other kind of robot joints configured to move parts of the robot arm in relation to each other.

Typically, the robot controller is configured to control the robot joints based on a dynamic model of the robot arm, where the dynamic model defines a relationship between the forces acting on the robot arm and the resulting accelerations of the robot arm. Often, the dynamic model comprises a kinematic model of the robot arm, knowledge about inertia of the robot arm and other parameters influencing the movements of the robot arm. The kinematic model defines a relationship between the different parts of the robot arm and may comprise information of the robot arm such as, length, size of the joints and links and can for instance be described by Denavit-Hartenberg parameters or like. The dynamic model makes it possible for the controller to determine which torques the joint motors shall provide in order to move the robot joints for instance at specified velocity, acceleration or in order to hold the robot arm in a static posture.

Typically, it is possible to attach various end effectors to the robot tool flange or other parts of the robot arm, such as grippers, vacuum grippers, magnetic grippers, screwing machines, welding equipment, dispensing systems, visual systems etc.

Robot arms need to be programmed by a user or a robot integrator which defines various instructions for the robot arm, such as predefined moving patterns and working instructions such as gripping, waiting, releasing, screwing instructions. The instruction can be based on various sensors or input signals which typically provide a triggering signal used to stop or start a given instruction. The triggering signals can be provided by various indicators, such as safety curtains, vision systems, position indicators, etc.

When the robot arm is a multipurpose robot arm, many users have difficulties in programming the robot arm to carry out a robot arm operation process sufficiently accurate and / or precise to satisfy requirements to the result of the multipurpose robot arms contribution to a product or work process.

**SUMMARY OF THE INVENTION**

The object of the present invention is to address the above described limitations with the prior art or other problems of the prior art. This is achieved by the method and robot arm according to the independent claims where the multipurpose robot arm comprising a plurality of robot joints connecting a robot base and a robot tool flange, said multipurpose robot arm comprises a robot controller configured to control the multipurpose robot arm in a standard mode of operation and in an application specific operation mode during part of robot arm operation process. Wherein the robot controller is configured to control the motion of the multipurpose robot arm during the robot arm operation process according to a plurality of predetermined basic operation commands, the basic operation commands are at least partly defined by one or more operation parameters. Wherein the robot controller is configured to control the multipurpose robot arm in the standard mode of operation during part of the robot arm operation process according to a first subset of the basic operation commands, wherein at least one of the one or more operation parameters defining the basic operation commands of the first subset is limited by a standard operation value. Wherein the robot controller is configured to control the multipurpose robot arm in the application specific operation mode during part of the robot arm operation process according to a second subset of the basic operation commands, wherein basic operation commands of the second subset is at least partly comprised by the first subset of basic operation commands and wherein at least one of the one or more operation parameters defining the basic operation commands of the second subset is limited by an application operation value. Wherein an allowed window of operation of the multipurpose robot arm when operated according to the basic operation commands defined by the standard operation value is different from the allowed window of operation of the multipurpose robot arm when operated according to the basic operation commands defined by the application operation value, and wherein the application operation value is defined by a desired property of the operation of the multipurpose robot arm in the application specific operation mode.

Operating the multipurpose robot arm according to the standard mode of operation is advantageous in that it has the effect, that in this mode requirements to accuracy and precision is not critical reflected by the predetermined standard operation values used in this mode of operation. Due to the standard operation values, the multipurpose robot arm is allowed to be operated at a speed, a path, joint torque, motor currents, etc. leading to on one hand e.g. vibrations, less accuracy, less precision or a combination hereof of the robot tool but on the other hand faster execution of cycle of the robot arm operation process. Such vibrations are allowed in the standard mode of operation and therefore this mode can be selected e.g. when high speed is prioritized over quality or aesthetic of the work performed by the robot tool.

Operating the multipurpose robot arm according to the application specific mode of operation is advantageous in that it has the effect, that in this mode the operation parameters are defined by application operation values leading to tool specific operation of the multipurpose robot arm. By determining the (tool) operation values in dependency of the tool mounted on the robot tool flange facilitates optimized control according to the particular robot tool. In the situation where the robot tool is a welding tool, vibrations of the welding tool are undesired in that these vibrations will spread to the welding and thereby be visual in the form of a "non-straight" welding.

Accordingly, when operated in the standard mode of operation, the robot controller, when controlling the robot arm, does not take into account any robot tool and performance of the robot tool. Therefore, the standard mode of operation may also be referred to as robot tool independent mode of operation. This is in contrary to the application specific mode of operation in which the robot controller, when controlling the robot arm, does take into account robot tool mounted on the robot tool flange and performance of the robot tool. Therefore, the application mode of operation may also be referred to as robot tool dependent mode of operation. Hence, the standard mode of operation may be at least partly be defined by e.g. a maximum joint speed and the application mode of operation may be at least partly defined by maximum adjusted joint speed. Wherein the adjusted joints speed ensures that a particular tool is operated more accurate, more precise, without vibrations or the like. It should be mentioned, that values of other operation parameters may also be seen as defining the standard and application mode of operation respectively.

Having different operation values for the same basic operation command when used in the standard and in the application mode of operation respectively is advantageous in that it has the effect, that the same multipurpose robot arm with a welding tool one day can operate as a (specific) welding robot, whereas the next day with a screw tool mounted, it can operate as a (specific) screwing robot. At least some of the basic operation commands used in the standard and in the application mode of operation are the same in that both modes e.g. require a forward motion of the robot tool in a given plan or along a side of a product to be handled by the robot tool. But depending on the specific robot tool and / or use hereof, the operation values are defining an allowed window of e.g. speed of which the robot tool is moved and torque acting on the robot joints that are different from each other.

In the context of the present invention, a window of operation should be understood as values of a range of operation parameters defining limits for the operation of the robot arm. A first operation parameter may have one value when the robot arm is operating in one mode of operation and another value when the robot arm is operating in another mode of operation. Particularly, according to the present invention, the values are defined by the tool mounted on the robot arm. This is advantageous in that it has the effect, that so-called process forces can be allowed by adjusting the values of specific operation parameters thereby adjusting the window of operation parameters simply referred to as window of operation. As an example, the screwing torque generated by a screwing tool when a screwing tool is in operation may be referred to as a process force.

The operation of a multipurpose robot arm during a robot arm operation process in both the standard and application mode of operation is advantageous in that it has the effect, that program code can be reused. Further, the basic operation commands of the program code are made by programmers before the integrator is using them to adapt the multipurpose robot arm to a particular process on site. This has the advantage that the integrator only has to call preprogrammed basic operation commands to establish the program code for a particular process. With this said, in most situations there will be some kind of local adaption of this program code, however, this does not change the fact, that programming in site made by the integrator can be made fast and with reduced risk of making programming errors. The latter is especially true in that programming a multipurpose robot arm requires knowledge of the effect one change has on the dynamics and balance of the multipurpose robot arm.

The desired property of the operation of the multipurpose robot arm is typically a particular movement performed without vibration, allowing increased joint torque or motor current, etc. desired when operated in the application mode of operation. Hence, being able to control the multipurpose robot arm according to a desired property is advantageous in that it has the effect, that the movement and / or the control is aligned with and results in an optimized carrying out of the task of the robot operation process. This effect is obtainable without a user or integrator having detailed knowledge of programming a multipurpose robot arm. This is because the effect is obtained by using a predetermined specific application mode for operation of which operation values of operation parameters of basic operation commands and tool specific operation commands are determined by application operation values. Wherein the tool operation parameters are predetermined and established e.g. based on test, trial and error, simulations or the like performed by experts in robot programing and dynamics. Typically, such experts are employed in a research and development department of a multipurpose robot arm OEM or robot tool manufacture.

According to an embodiment of the invention, the desired property is determined by the robot tool mounted on the robot tool flange. More precisely the robot arm comprises a robot tool mounted on the robot tool flange and the desired property is determined by the robot tool. This is advantageous in that it has the effect, that the application operation values are adapted specifically to the robot tool and therefore the desired properties of the movement of the multipurpose robot arm is optimized to that specific robot tool. Thereby, the final result of the robot operation process is optimized at least from a visual perspective which are often decisive for costumes willingness to buy a product. The robot tool may be any tool that is suitable for mounting on the robot tool flange i.e. a tool than can modify, move, analyze, etc. an object.

According to an embodiment of the invention, the desired property is at least partly suppressing vibrations of the robot arm and/or robot tool by reducing speed of movement This is advantageous even though it reduces operation speed in that it has the effect, that the robot tool is more precise and e.g. when welding or painting vibrations are not spread to the welding or painting. Thereby, the final result of the robot operation process is optimized at least from a visual perspective which are often decisive for customer's willingness to buy a product.

According to an embodiment of the invention, the desired property is allowing increased torque obtained by increasing the allowed upper limit for torque acting on the robot joint.

According to an embodiment of the invention, the plurality of predetermined basic operation commands includes at least 2 basic operation commands, preferably at least 5 and most preferably at least 10 basic operation commands. This is advantageous in that it has the effect, that complicated robot operation processes, including changing direction of movement of the multipurpose robot arm several times, can be controlled according to the present invention.

According to an embodiment of the invention, the robot controller is configured to control the multipurpose robot arm in the standard mode of operation during a first part of the operation process, in the application specific mode of operation during a subsequent part of the robot arm operation process and again in the standard mode of operation during a final part of the robot arm operation process. This is advantageous in that it has the effect, that only when the robot tool is used, the robot arm is used in the application specific mode of operation. In the standard mode of operation the operation values can be designed to optimize speed without compromising safety. This is in contrary to the application operation values used in the application specific mode of operation, where operation values are designed to optimize operation of the robot which sometimes compromises safety. This can be allowed because in such situations, the robot tool is at a safe spot in the robot cell, where humans cannot get injured.

According to an embodiment of the invention, the robot controller is configured to only control the multipurpose robot arm in the application specific mode of operation when the robot tool is active. This is advantageous in that it has the effect, that the multipurpose robot arm, when the tool is not activated, can be operated according to standard values of operation parameters leading to faster and less accurate operation. Only in the application specific mode of operation, the multipurpose robot arm is operated according to the application operation values of the operation parameters of the basic operation commands (or of tool specific operation commands). Thereby, as long as the multipurpose robot arm is not actively using its robot tool, the multipurpose robot arm is controlled according to standard operation values of operation parameters.

According to an embodiment of the invention, the robot controller is configured to activate the robot tool, when the robot tool is in a predetermined position defined by the program code.

According to an embodiment of the invention, the multipurpose robot arm is in the application specific mode of operation when, the robot controller is in a predetermined position defined by the program code. This is advantageous in that it has the effect, that the application specific mode of operation is first entered just before the tool is about to be used in operation i.e. just before the welding, screwing, placing, etc. is about to take place. In this way, the robot tool is in an inaccessible position or the period of use for welding screwing, placing, etc. is so limited that it does not affect the wear and thereby end of lifetime of the multipurpose robot arm or tool. In this way better performance of the robot tool is obtained without compromising safety and wear of the robot arm.

According to an embodiment of the invention, the robot arm is inactive, when the robot tool is moved to a position in which the program code terminates the use of the robot tool. This is advantageous in that it has the effect, that the operation of the robot arm again returns to the standard mode of operation and thereby returns to its more flexible standard settings.

According to an embodiment of the invention, basic operation commands include one from the list comprising: forward, backward, up, down, move to way point, right rotation, left rotation and home. Basic operation commands are advantageous in that they have the effect that an integrator easily can used a combination hereof to establish part of a control program code for a multipurpose. The "home" command may include several of basic operation commands needed to return the robot tool from a present location to a start position.

According to an embodiment of the invention, the application mode of operation further comprises tool specific operation commands. Having specific tool operation commands is advantageous in that it has the effect that the integrator can easily combine these with the basic operation commands and thereby in theory develop a program code for control of the multipurpose robot arm by only specifying start / end points of operation commands. In practice, operation values may sometimes also need to be adjusted as described below.

According to an embodiment of the invention, the robot controller is configured to control at least one of the basic operation commands of the second subset, which are also part of the first subset of basic operation commands, according to application operation value. This is advantageous in that it has the effect, that e.g. a forward motion performed in the application specific operation mode can be carried out with higher accuracy and / or higher precision than when performed in the standard mode of operation. This means that even though the forward motion may be slower, it is preferred in that it allows more precise and accurate work done by the robot tool.

According to an embodiment of the invention, the application operation value of a force operation parameter is determined by establishing expected process force or expected process torques applied from the robot tool.

According to an embodiment of the invention, the application operation value of a force operation parameter is determined by establishing expected process force or expected process torques applied during the application specific mode of operation. This is advantageous in that it has the effect, that the application operation value is only cancelling and/or allowing out process forces and not forces applied from externals such as person colliding with the multipurpose robot arm. Thereby, the multipurpose robot arm is still e.g. stopping operation if it collides with a person even when operated in the application specific mode of operation.

According to an embodiment of the invention, the multipurpose robot arm, with the same robot tool, in a first robot arm operation process, is controlled with a first set of application operation values and in a second robot arm operation process is controlled with a second set of application operation values. This is advantageous in that it has the effect, that the same multipurpose robot arm with the same robot tool can be optimized to carry out two different robot arm operation processes with the same robot tool.

According to an embodiment of the invention, the application operation value is a soft stop value, and wherein the robot controller is configured to stop the operation of the multipurpose robot if the soft stop value is crossed. This is advantageous in that it has the effect, that for a given robot tool, the application operation values can be used to stop the operation of the multipurpose robot arm. Hence, if e.g. a welding process is allowed to continue below a given level of vibrations, and this level is defined by one or more application operation values, then the robot controller can stop the welding process if one or the application operation values are exceeded. It should be mentioned that the soft stop values can both be maximum, minimum and average values of an operation value.

According to an embodiment of the invention, the application operation value is a minimum value for an operation parameter related to one selected from the list comprises for acceleration, speed, torque, force, current vibration, temperature and weight. This is advantageous in that it has the effect, that operation of the multipurpose robot arm is adapted to operation with a particular robot tool.

According to an embodiment of the invention, the application operation value is a maximum value for an operation parameter related to one selected from the list comprising for acceleration, speed, torque, force, current vibration, temperature and weigh. This is advantageous in that it has the effect, that operation of the multipurpose robot arm is adapted to operation with a particular robot tool.

Different robot tools require different windows of operation for the best result of the work carried out. The best result may be measured in speed, accuracy, precision, aesthetic, etc. hence, according to the particular robot tool particular values of application operation values are selected to define either both upper and lower limit for an allowable window of operation or at least one of the upper and lower limits of such window.

According to an embodiment of the invention, the standard operation values and the application operation values are predetermined for a plurality of basic operation commands. This is advantageous in that it has the effect, that it is easy and fast onsite to establish a program code of operation commands for the multipurpose robot arm to follow through a robot arm operation process.

According to an embodiment of the invention, the standard operation values and a plurality of different application operation values are predetermined for at least one basic operation command. This is advantageous in that it has the effect, that it is easy and fast onsite to establish a program code of operation commands for the multipurpose robot arm to follow through a robot arm operation process no matter which robot tool that is mounted on the robot tool flange.

According to an embodiment of the invention, operation values of basic operation commands used in the application specific operation mode are predetermined and compared to operation values of the basic same operation commands used in the standard mode of operation are less restrictive. This is advantageous in that it has the effect, that it allows the multipurpose robot arm for a defined part of the robot operation process to exceed a soft stop threshold value for an operation parameter. Thereby it is possible to fastening with larger torque, accelerate / decelerate a rotating tool faster i.e. expand allowed window of operation of certain operation parameters that are relevant for a particular robot tool in a particular part of a robot operation process. Hence, a value of an operation parameter partly defining a window of operation of a standard mode of operation stopes the robot arm "earlier" than when the robot arm is operated in the application mode of operation because the value of the same operation parameter allows e.g. a higher value thereby making the window of operation less restrictive in the application mode of operation.

According to an embodiment of the invention, wherein operation values of basic operation commands used in the application specific operation mode are predetermined and compared to operation values of the same basic operation commands used in the standard mode of operation are more restrictive. This is advantageous in that it has the effect, that the operation of the multipurpose robot arm for a defined part of the robot operation process is reduce by narrowing the allowed window of operation. Thereby the multipurpose robot arm is restricted e.g. in speed of movement forward and thereby the time the multipurpose robot arm has to perform a particular work is increased which for some particular tasks leads to higher quality or better aesthetic look of the resulting task.

According to an embodiment of the invention, the operation values used in the standard mode of operation are protected from changes. This is advantageous in that it has the effect, that an inexperienced integrator is not by mistake changing values that compromises safety and thereby operated the multipurpose robot arm where it may collide with a person with e.g. higher value of a torque soft stop threshold.

According to an embodiment of the invention, the operation values used in the application mode of operation are free to change. This is advantageous in that it has the effect, that in this mode of operation e.g. the risk of collision with a person very unlikely due to position of robot tool and therefore an extra torque cannot be from such collision and can therefore be allowed for a particular part of the robot operation process.

According to an embodiment of the invention, the operation values are allowed to be adjusted within a predetermined window defined by hard stop threshold values. This is advantageous in that it has the effect, that the no adjustments made to operation values may cause damage to the multipurpose robot arm and preferably also not to objects in the robot cell.

According to an embodiment of the invention, the multipurpose robot facilitates control of at least two of the robot tools selected from the list comprising: welding tool, handling tool, cutting tool, machine tending tool, assembling tool, quality tool, material tool and material addition tool. A multipurpose robot arm facilitating control of several different robot tools are advantageous in that it has the effect, that production cost of the more expensive multipurpose robot including robot base, robot joints and tool flange can be reduced in that the same multipurpose robot can be used with this huge variety of different less expensive robot tools. A further advantage is that the owner of one multipurpose robot, by changing tool can carry out a range of different highly specialized tasks without the need to buy more multipurpose robots or different specialized robots leading to an increased foot print required on the production floor for an additional robot cell.

According to an embodiment of the invention, the welding tool is a tool facilitating welding objects according to at least one of the methods of the list comprising: Tig, laser, ultrasonic, plasma, spot and soldering.

According to an embodiment of the invention, the handling tool is a tool facilitating handling objects according to at least one of the methods of the list comprising: transferring, sorting, packaging, palletizing, labelling and lifting. A tool facilitating handling objects can for instance be mechanical grippers, vacuum grippers, robot hands etc.

According to an embodiment of the invention, the cutting tool is a tool facilitating cutting objects according to at least one of the methods of the list comprising: laser, waterjet and plasma. The tool facilitating cutting object can for instance be provided in form of laser cutters, waterjet cutters and/or plasma cutters.

According to an embodiment of the invention, the machine tending tool is a tool facilitating tending objects according to at least one of the methods of the list comprising: CNC, metal casting, IMM and pressing. CNC is an abbreviation of a Computerized Numerically Controlled machine and IMM is an abbreviation of an Injection Molding Machine.

According to an embodiment of the invention, the assembling tool is a tool facilitating assembling objects according to at least one of the methods of the list comprising: inserting, mounting, positioning, screwing, nut driving, clinching, riveting, pressing, winding and cable routing.

According to an embodiment of the invention, the quality tool is a tool facilitating quality inspection of objects according to at least one of the methods of the list comprising: inspection, measuring, testing and metrology.

According to an embodiment of the invention, the material tool is a tool facilitating processing objects according to at least one of the methods of the list comprising: removing, deburring, milling, polishing, routing and drilling.

According to an embodiment of the invention, the material addition tool is a tool facilitating adding material to objects according to at least one of the methods of the list comprising: dispensing, painting and dipping.

Moreover, the invention relates to a method of controlling a multipurpose robot arm comprising a plurality of robot joints connecting a robot base and a robot tool flange, said multipurpose robot arm comprises a robot controller controlling the multipurpose robot arm in a robot arm operation process according to: a first level program code monitoring operation values of operation parameters during operation of the multipurpose robot arm, wherein the first level control initiates hard stop of operation of the multipurpose robot arm if an operation value is outside a predetermined safety range. Second level program code controlling basic motions of the multipurpose robot arm, according to basic operation commands defined by standard operation values, and third level application program code controlling basic motions of the multipurpose robot arm, according to basic operation commands defined by application operation values. Wherein during a first part of a robot arm operation process, the multipurpose robot arm is controlled by the second level program code by a plurality of basic operation commands defined by the standard operation values. Wherein during a second part of the robot arm operation process, the multipurpose robot arm is controlled by the third level application program code, wherein the third level application program code is determined by a desired property of the operation of the multipurpose robot arm in the application specific operation mode, and wherein during the first and second part of the robot arm operation process, the robot arm is furthermore monitored by the first level program code.

This is advantageous in that it has the effect that a programmer or integrator can program the multipurpose robot so that it becomes a specific robot arm simply by using program code from the three levels. Thereby, the integrator does not have to be an expert in programming broadening the group of people that can be employed as an integrator. This is advantageous in periods and areas where demand of qualified labor is high. Program code of the first level is not accessible for modification in that it is part of a safety system. Program code of the second layer is not accessible for modification in that it is part of standard code used for moving the robot. With this said, it is allowed to modify although not preferred in that modifications made will not be tested. Program code of the third level is used to optimize the operation of the robot tool and thereby

As mentioned, the desired property required by a robot tool mounted on the robot tool flange is directly related to the final result of the work carried out by the robot tool. Hence a desired property may be a vibration suppression which if obtained results in more precise or accurate painting, welding, path following, precision stacking, etc.

Normally the integrator is not allowed to change operation values such as soft stop values of operation parameters and therefore since the robot arm is a multipurpose type of robot arm, some specific applications are not well carried out by the robot arm. Further, the integrator may not know which parameters to adjust to which value to obtain a desired property of movement of the multipurpose robot arm. To allow the multipurpose robot arm to carry out a specific application / job, sometimes these soft values needs to be changed and this can be done via the third level program without access to first or second level program code. Because this is done via the third level program, the integrator is not going to mesh up anything in the second level program and thereby make changes to soft stop values used during basic operation commands in the standard mode of operation. Hence, back at the research and development department, selected operation parameters are defined for a particular tool / application / job and the application operation values for these operation parameters are the only once the integrator can change. In many situations, change hereof is not even necessary. Further, the changed values are only used when the third level program is executed during a robot operation process loop when or just before the robot tool is activated.

According to an embodiment of the invention, the desired property is determined by the robot tool mounted on the robot tool flange. This is advantageous in that it has the effect, that the application operation values are adapted specifically to the robot tool and therefore the desired properties of the movement of the multipurpose robot arm is optimized to that specific robot tool leading to a higher quality of visual appearing final result

According to an embodiment of the invention, the operation values of the third level application program code is accessible for update by a robot integrator. This is advantageous in that it has the effect, that programming errors causing malfunction of the multipurpose robot arm are reduced in that only a limited top-level operation values are allowed to be changed by the robot integrator.

According to an embodiment of the invention, the operation parameters of the third level application program code is used in the control of the multipurpose robot arm for a limited period of time, wherein the limited period of time is less than 30% of the time of a robot operation process, preferably less than 20% of a robot operation process and most preferably less than 10% of a robot operation process. This is advantageous in that it has the effect that only a reduced time period of the robot operation process starting when the robot tool is in a start position and ending when the robot tool is in the start position again ready to perform the subsequent robot operation process. The reduced time is advantageous at least in situations where soft stop threshold values are increased and risk of collision is present.

According to an embodiment of the invention, the robot controller comprises a first level program code configured for monitoring operation values of operation parameters during operation of the multipurpose robot arm, wherein the first level program code initiates hard stop of operation of the multipurpose robot arm if an operation value is outside a predetermined safety range.

The dependent claims describe possible embodiments of the robot arm and methods according to the present invention. The advantages and benefits of the present invention are described in the detailed description of the invention.

## BRIEF DESCTIPTION OF THE DRAWINGS

Fig. 1 illustrates a robot arm according to the present invention;

fig. 2 illustrates a simplified structural diagram of the robot arm;

fig. 3 illustrates a simplified overview of a robot operation process;

fig. 4 illustrates a robot arm comprising a welding tool; and

fig. 5 illustrates a robot arm comprising a screwing tool.

## DETAILED DESCRIPTION OF THE INVENTION

The present invention is described in view of exemplary embodiments only intended to illustrate the principles of the present invention. The skilled person will be able to provide several embodiments within the scope of the claims. Throughout the description, the reference numbers of similar elements providing similar effects have the same last two digits. Further it is to be understood that in the case that an embodiment comprises a plurality of the same features then only some of the features may be labeled by a reference number.

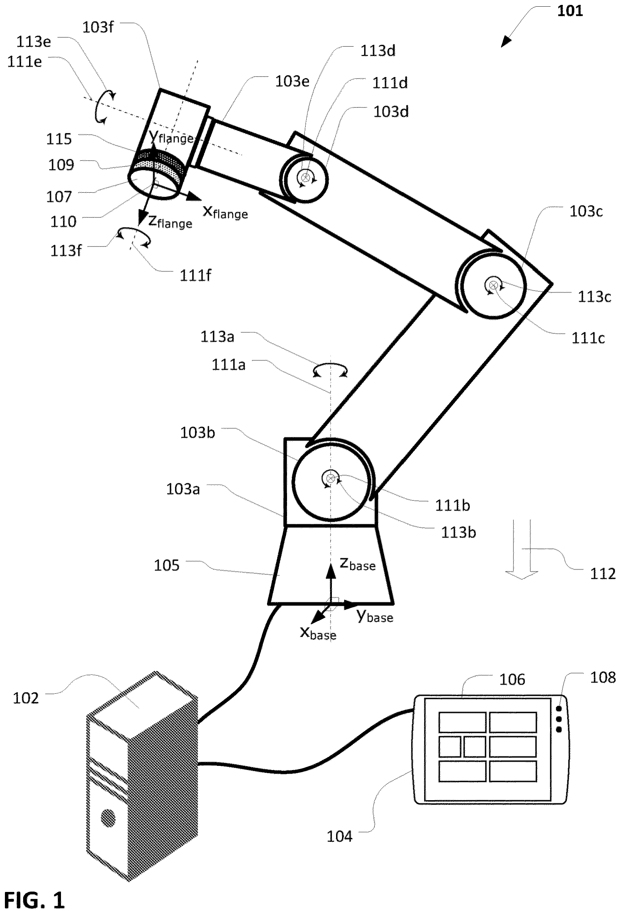

Fig. 1 illustrates a multipurpose robot arm 101 (sometimes referred to simply as robot arm) comprising a plurality of robot joints 103a, 103b, 103c, 103d, 103e, 103f connecting a robot base 105 and a robot tool flange 107. Hence, the robot arm comprising a robot base, a robot tool flange, and a plurality of robot joints connecting the robot base and the robot tool flange. A base joint 103a is configured to rotate the robot arm around a base axis 111a (illustrated by a dashed dotted line) as illustrated by rotation arrow 113a; a shoulder joint 103b is configured to rotate the robot arm around a shoulder axis 111b (illustrated as a cross indicating the axis) as illustrated by rotation arrow 113b; an elbow joint 103c is configured to rotate the robot arm around an elbow axis 111c (illustrated as a cross indicating the axis) as illustrated by rotation arrow 113c, a first wrist joint 103d is configured to rotate the robot arm around a first wrist axis 111d (illustrated as a cross indicating the axis) as illustrated by rotation arrow 113d and a second wrist joint 103e is configured to rotate the robot arm around a second wrist axis 111e (illustrated by a dashed dotted line) as illustrated by rotation arrow 113e. Robot joint 103f is a tool joint comprising the robot tool flange 107, which is rotatable around a tool axis 111f (illustrated by a dashed dotted line) as illustrated by rotation arrow 113f. The illustrated robot arm is thus a six-axis robot arm having six degrees of freedom provided as six rotational robot joints, however it is noticed that the present invention can be provided in robot arms comprising less or more robot joints, tool flanges and/or other types of robot joints such as prismatic robot joints.

Each of the robot joints are provided as rotational robot joints comprising an output flange rotatable in relation to the robot joint and the output flange is connected to a neighbor robot joint either directly or via an arm section as known in the art. The robot joint comprises a joint motor configured to rotate the output flange, for instance via a gearing or directly connected to the motor shaft. In other embodiments at least one of the robot joints may be provided as a prismatic joint comprising an output flange translational in relation to the robot joint by a robot joint motor and the output flange is connected to a neighbor robot joint either directly or via an arm section as known in the art.

Additionally, the robot joint comprises at least one joint sensor providing a sensor signal indicative of at least one of the following parameters: an angular position of the output flange, an angular position of the motor shaft of the joint motor, a motor current of the joint motor, an external force trying to rotate/move the output flange or motor shaft. For instance, the angular position of the output flange can be indicated by an output encoder such as optical encoders, magnetic encoders which can indicate the angular position of the output flange in relation to the robot joint. Similarly, the angular position of the joint motor shaft can be provided by an input encoder such as optical encoders, magnetic encoders which can indicate the angular position of the motor shaft in relation to the robot joint. It is noted that both output encoders indicating the angular position of the output flange and input encoders indicating the angular position of the motor shaft can be provided, which in embodiments where a gearing have been provided makes it possible to determine a relationship between the input and output side of the gearing. The joint sensor can also be provided as a current sensor indicating the current through the joint motor and thus be used to obtain the torque provided by the motor. For instance, in connection with a multiphase motor, a plurality of current sensors can be provided in order to obtain the current through each of the phases of the multiphase motor.

A force sensor 109 may be arranged at the robot tool joint 103f and is configured to sense the force applied to the robot tool flange 107. The force sensor 109 provides a force signal indicating a force provided at the tool flange. In the illustrated embodiment the force sensor is integrated into the robot tool flange and is configured to indicate the forces applied to the robot tool flange in relation to a reference point 110 of the robot tool flange. In fig. 1 the reference point 110 is coincident with the origin of a tool flange coordinate system defining three coordinate axes $x_{flange}$, $y_{flange}$, $z_{flange}$. In the illustrated embodiment the origin of the robot tool flange coordinate system has been arrange on the tool flange axis 111f with one axis ($z_{flange}$) parallel with the tool flange axis and at the outer surface of the robot tool. However, the force sensor can indicate the force applied to the robot tool flange in relation to any point which can be linked to the robot tool flange coordinate system. In one embodiment the force sensor is provided as a six-axis force-torque sensor configured to indicate the forces along and the torques around three perpendicular axes. The force torque sensor can for instance be provided as any force torque sensor capable of indicating the forces and torques in relation to a reference point for instance any of the force torque sensors disclosed by WO2014/110682A1, US4763531, US2015204742. However, it is to be understood that the force sensor in relation to the present invention not necessarily need to be capable of sensing the torque applied to the tool sensor.

An acceleration sensor 115 may be arranged at the robot tool joint 103f and is configured to sense the acceleration of the robot tool joint 103f and/or the acceleration of the robot tool flange 107. The sensor 115 provides an acceleration signal indicating the acceleration force of the acceleration of the robot tool joint 103f and/or the acceleration of the robot tool flange 107. In the illustrated embodiment the acceleration sensor is integrated into the robot tool joint and is configured to indicate accelerations of the robot tool joint in relation to the reference point 110 of the robot tool flange. However, the acceleration sensor can indicate the acceleration of the robot tool joint in relation to any point which can be linked to the robot tool flange coordinate system. The acceleration sensor can be provided as any accelerometer capable of indicating the accelerations of an object. The acceleration sensor can for instance be provided as an IMU (Inertial Measurement Unit) capable of indicating both linear acceleration and rotational accelerations of an object.

The robot arm comprises at least one robot controller 102 configured to control the robot joints by controlling the motor torque provided to the joint motors based on a dynamic model of the robot arm, the direction of gravity acting 112 and the joint sensor signal. The robot controller 102 can be provided as a computer comprising an interface device 104 enabling a user to control and program the robot arm. The controller can be provided as an external device as illustrated in fig. 1, as a device integrated into the robot arm or as a combination thereof. The interface device can for instance be provided as a teach pendent as known from the field of industrial robots which can communicate with the controller via wired or wireless communication protocols. The interface device can for instanced comprise a display 106 and a number of input devices 108 such as buttons, sliders, touchpads, joysticks, track balls, gesture recognition devices, keyboards etc. The display may be provided as a touch screen acting both as display and input device.

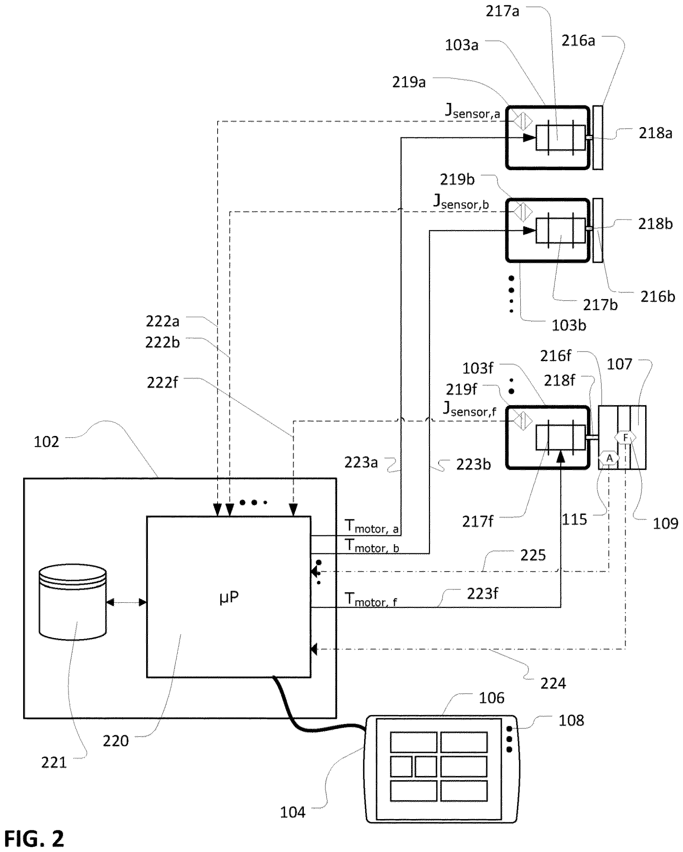

Fig. 2 illustrates a simplified structural diagram of the robot arm illustrated in fig. 1. The robot joints 103a, 103b and 103f have been illustrated in structural form and the robot joints 103c, 103d, 103e have been omitted for the sake of simplicity of the drawing. Further the robot joints are illustrated as separate elements however it is to be understood that they are interconnected as illustrated in fig. 1. The robot joints comprise an output flange 216a,216b,216f and a joint motor 217a, 217b, 217f, where the output flange 216a,216b,216f is rotatable in relation to the robot joint and the joint motor 217a, 217b, 217f is configured to rotate the output flange via an output axle 218a, 218b, 218f. In this embodiment the output flange 216f of the tool joint 103f comprises the tool flange 107. At least one joint sensor 219a, 219b, 219f providing a sensor signal 222a, 222b, 222f indicative of at least one joint sensor parameter $J_{sensor,a}$, $J_{sensor,b}$, $J_{sensor,f}$ of the respective joint. The joint sensor parameter is at least indicative of one pose parameter indicating the position and orientation of the output flange in relation to the robot joint for instance: an angular position of the output flange, an angular position of a shaft of the joint motor, a motor current of the joint motor. For instance, the angular position of the output flange can be indicated by an output encoder such as optical encoders, magnetic encoders which can indicate the angular position of the output flange in relation to the robot joint. Similar, the angular position of the joint motor shaft can be provided by an input encoder such as optical encoders, magnetic encoders which can indicate the angular position of the motor shaft flange in relation to the robot joint.

The robot controller 102 comprises a processor 220 and memory 221 and is configured to control the joint motors of the robot joints by providing motor control signals 223a, 223b, 223f to the joint motors. The motor control signals 223a, 223b, 223f are indicative of the motor torque $T_{motor,a}$, $T_{motor,b}$, and $T_{motor,f}$ that each joint motor shall provide to the output flanges and the robot controller is configured to determine the motor torque based on a dynamic model of the robot arm as known in the prior art. The dynamic model makes it possible for the controller to calculate which torque the joint motors shall provide to each of the joint motors to make the robot arm perform a desired movement. The dynamic model of the robot arm can be stored in the memory 221 and be adjusted based on the joint sensor parameters $J_{sensor,a}$, $J_{sensor,b}$, $J_{sensor,f}$ For instance, the joint motors can be provided as multiphase electromotors and the robot controller can be configured to adjust to motor torque provided by the joint motors by regulating the current through the phases of the multiphase motors as known in the art of motor regulation.

Robot tool joint 103f comprises the force sensor 109 providing a force signal 224 indicating a force provided to the tool flange. For instance, the force signal can be indicated as a force vector $\overrightarrow{F_{sensor}^{flange}}$ in the robot tool flange coordinate system:

$$\text{eq. 1} \qquad \overrightarrow{F_{sensor}^{flange}} = \begin{pmatrix} F_{x,sensor}^{flange} \\ F_{y,sensor}^{flange} \\ F_{z,sensor}^{flange} \end{pmatrix}$$

where $F_{x,sensor}^{flange}$ is the indicated force along the $x_{flange}$ axis, $F_{y,sensor}^{flange}$ is the indicated force along the $y_{flange}$ axis and $F_{z,sensor}^{flange}$ is the indicated force along the $z_{flange}$ axis.

In an embodiment where the force sensor is provided as a combined force-torque sensor the force-torque sensor can additionally also provide a torque signal indicating the torque provide to the tool flange, for instance as a separate signal (not illustrated) or as a part of the force signal. The torque can be indicated as a torque vector in the robot tool flange coordinate syste m :

$$\text{eq. 2} \qquad \overrightarrow{T_{sensor}^{flange}} = \begin{pmatrix} T_{x,sensor}^{flange} \\ T_{y,sensor}^{flange} \\ T_{z,sensor}^{flange} \end{pmatrix}$$

where $T_{x,sensor}^{flange}$ is the indicated torque around the $x_{flange}$ axis, $T_{y,sensor}^{flange}$ is the indicated torque around the $y_{flange}$ axis and $T_{z,sensor}^{flange}$ is the indicated torque around the $z_{flange}$ axis.

Robot tool joint 103f comprises the acceleration sensor 115 providing an acceleration signal 225 indicating the acceleration of the output flange 216f. For instance, the acceleration signal can indicate an acceleration vector $\overrightarrow{A_{sensor}^{flange}}$ in the robot tool flange coordinate system:

$$\text{eq. 3} \qquad \overrightarrow{A_{sensor}^{flange}} = \begin{pmatrix} A_{x,sensor}^{flange} \\ A_{y,sensor}^{flange} \\ A_{z,sensor}^{flange} \end{pmatrix}$$

where $A_{x,sensor}^{flange}$ is the sensed acceleration along the $x_{flange}$ axis, $A_{y,sensor}^{flange}$ is the sensed acceleration along the $y_{flange}$ axis and $A_{z,sensor}^{flange}$ is the sensed acceleration along the $z_{flange}$ axis.

In an embodiment where the acceleration sensor is provided as a combined accelerometer/gyrometer (e.g. an Inertial Measurement Unit, IMU) the acceleration sensor can additionally provide an angular acceleration signal indicating the angular acceleration of the output flange in relation to robot tool flange coordinate system, for instance as a separate signal (not illustrated) or as a part of the acceleration signal. The angular acceleration signal can indicate an acceleration vector $\overrightarrow{\alpha_{sensor}^{flange}}$ in the robot tool flange coordinate system

$$\text{eq. 4} \qquad \overrightarrow{\alpha_{sensor}^{flange}} = \begin{pmatrix} \alpha_{x,sensor}^{flange} \\ \alpha_{y,sensor}^{flange} \\ \alpha_{z,sensor}^{flange} \end{pmatrix}$$

where $\alpha_{x,sensor}^{flange}$ is the angular acceleration around the $x_{flange}$ axis, $\alpha_{y,sensor}^{flange}$ is the angular acceleration around the $y_{flange}$ axis and $\alpha_{z,sensor}^{flange}$ is the angular acceleration around the $z_{flange}$ axis.

Multipurpose robot arm 101 should be understood as a robot arm to which it is possible to connect a variety of different robot tools (not illustrated). When a tool is connected to the robot tool flange 107, and the multipurpose robot arm can be controlled according to the present invention, where it changes status from the multipurpose robot arm to an application specific robot arm.

Robot controller 102 should be understood as a control device described above comprising a processor 220 facilitating reading and executing program code and transforming this to operation commands for one or more of the robot joints 103 or the robot tool. Personal computers (PCs), tablets, mobile phones, industrial programmable controllers also referred to as PLCs are an example of a suitable robot controller.

Motion of the robot arm should be understood as movement of one or more robot joints as well as of the robot tool. Basic operation commands should be understood as pieces of program code which when called and executed facilities a predetermined operation of the robot arm, for instance movement of the robot arm independent of which robot tool is mounted on the robot tool flange, fixing the robot arm in a fixed position, waiting for an input signal etc. Examples of basic operation commands are move forward, move to left, move to right, move up, move down, move to waypoint, rotate joint(s), activate robot joints, wait for input signals, etc.

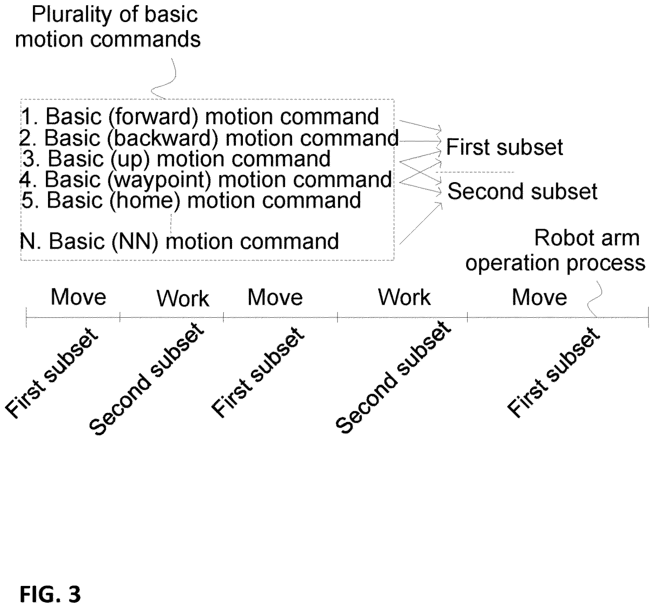

A robot arm operation process should be understood as when the robot arm is in operation doing what it is programmed to do. This program includes a subset of the plurality of available basic operation commands hence, a robot arm operation process is established by one or more of the basic operation commands subsequently executed by the robot controller. A schematic illustration of a robot arm operation process is illustrated on fig. 3. As mentioned above and as will be clear from the above, the robot arm operation process according to the invention includes control of basic operation commands according to standard and application specific mode of operation.

In fig. 3 this is illustrated by first and second subset of basic operation commands. The first subset refers to the standard mode of operation and the second subset refers to the application mode of operation. As illustrated a robot arm operation process is includes moving the robot tool and working with the robot tool. When the robot tool is moved, the movement is made with reference to the standard mode of operation i.e. using standard operation values for the basic operation commands. When the robot tool is working, the working is made with reference to the application mode of operation i.e. using application operation values for the basic motion. As illustrated, some basic operation commands are used in both modes of operation just with a different set of operation values. It should be mentioned, that the robot tool can be moved in the application mode i.e. with application operation values and it can work in the standard mode of operation i.e. with standard operation values.

In standard mode of operation, the basic operation commands are defined by operation parameters which again are defined by standard operation values. Examples of standard mode of operation could be the part of the operation process of the multipurpose robot arm where the multipurpose robot arm is moving from a robot tool from a "home" position to a start position of operation of the robot tool, moving back to the home position from end position of operation with the robot tool, but also some movements where the robot tool is activated such as palletizing objects which are not fragile or do not require precise and / or accurate positioning beyond what can be complied with by the standard values of the operation parameters (will be defined in paragraphs [0030]-[0032] used. The home position is the position in which the multipurpose robot arm returns to when not in use.

In application mode of operation, the operation parameters of the basic operation commands are defined by application operation values that are different from the standard operation values. This is true for at least part of the basic operation commands that are used in both the standard and application specific mode of operation. Examples of application specific operation mode could be the part of the operation process of the multipurpose robot arm where the multipurpose robot arm is using the robot tool and where the result of the operation of the robot tool requires high precision and / or accuracy (e.g. palletizing fragile objects), the requirements to finish of the operation of the robot tool is high (e.g. welding or painting), the operation of the robot tool induces a high torque for a short period (screwing, cutting, sawing ). Hence, when operated in the application specific operation mode, the multipurpose robot arm could be said to be transformed into an application specific robot arm. This means that the multipurpose robot arm now is specialized to comply with requirements concerning a particular task and also that this task is the only task the multipurpose robot arm then is able to handle when in application specific operation mode. It should be mentioned, that the application operation values may be defined by the robot tool mounted on the multipurpose robot arm.

Operation parameters are used by the robot controller to control e.g. acceleration and speed of a movement, allowed torque acting on a robot joint, etc. during a basic operation command. For each operation parameter an operation value is determined defining the velocity, torque, etc. A standard operation value for an operation parameter is typically chosen as a compromise between precision, accuracy and speed of operation of the multipurpose robot arm. An application operation value for an operation parameter is typically chosen with focus on optimizing the work made by the robot tool. Such optimization could aim at reducing vibration when moving the robot tool, reduce noise, increase accuracy and precision, energy optimization, etc. This aim can be achieved by understanding the dynamic model of the robot arm and thereby adjust or optimize one or more operation values and include one or more operation parameters. Such optimization requires insight in the dynamic model and/or the kinematic model of the multipurpose robot and hence it is not something that a typical robot arm user or integrator is able to do.

During the standard mode of operation, the robot controller is controlling the basic operation commands according to standard predetermined operation values of the operation parameters relevant for the particular basic operation command. During the application specific mode of operation, the robot controller is controlling one or more of the same basic operation commands according to optimized operation values which are also predetermined and referred to as application operation values. Often the integrator may have access to adjust the application operation values e.g. during commissioning of the robot arm, but typically the integrator has not access to adjust the standard operation values

Predetermined should here be understood as a value e.g. of an operation value that are determined prior to the execution of the program code used by the robot controller to control the motion of the multipurpose robot arm. The standard values of the operation parameters can be part of a standard program package stored in the memory 221 communicating with the robot controller. This is advantageous in that it has the effect, that when programming an operation process for a multipurpose robot arm, this can easily be done by using the predetermined basic operation commands having operation parameters limited or defined by operation values.

An operation value of an operation parameters used in an application specific operation command is referred to as an application operation value. The application operation values are typically also predetermined. With this said, predetermined application operation values may be adjusted e.g. by a robot integrator when installing and adapting the multipurpose robot arm to the particular task its tool defines for its operation.

As mentioned, the operation values are defining values for e.g. speed and torque related to movement and general operation of the multipurpose robot arm. Hence, the operation values can be both a setpoint, reference point, maximum, minimum and even average values for an operation parameter used during a robot arm operation process. Therefore, in embodiments of the invention, the standard and application operation values can be seen as minimum, maximum or even average values for the operation parameters used in the basic operation commands.

Some of these thresholds or setpoint values together defines upper and lower (threshold) values for a given operation parameter and some defines either an upper or a lower value. An upper value of e.g. a speed may together with a starting speed which in an example could be 0m/s define an allowed window of operation of the particular operation parameter and thereby of the basic operation command. An allowed window of operation can also be defined by an upper and a lower threshold value.

It should be mentioned, that when using the terms accuracy and precision the following should be understood. In the fields of science, and statistics, accuracy is the degree of conformity of a measured or calculated quantity to its actual (true) value. Accuracy is closely related to precision, also called reproducibility or repeatability, the degree to which further measurements or calculations show the same or similar results. The results of calculations or measurements can be accurate but not precise; precise but not accurate; neither; or both. Accordingly, when referring to accurate control of the robot arm a reference is made to its ability to move through given points i.e. how close (or accurate) is the robot arm moving through such points. Further, when referring to a precise control of the robot arm a reference is made to its ability to follow the same route through such points one cycle after the other.

As mentioned, the program code is used by the robot controller to control the movement (via basic operation commands) of the multipurpose robot arm. At least part of the program code is developed as a standard program package that is delivered with the multipurpose robot arm. The program code comprises a plurality of different basic operation commands which when executed by the robot controller determines a motion of the multipurpose robot arm. Example hereof could be forward, backwards, up, down, turn right, turn left, move to waypoint, rotate etc. Further, the program code may include specific tool operation commands that is developed to control a known standard tool or a specialized tool. The program code for such specialized tool may be developed by the developer of the specialized tool to comply with the interfaces of the program code of the standard program package.

The standard program package may be stored in the memory to which the robot controller is communicatively connected. The program code may comprise a first layer of code that is monitoring safety of the multipurpose robot arm. This part of the program code monitors predefined operation parameters and if hard stop threshold values hereof are crossed, hard stop of the multipurpose robot arm is initiated. The integrator is not allowed to change any settings of this part of the program code especially not the hard stop threshold values. Hard stop is considered the same as an emergency stop pressed by a person observing a dangerous situation require immediate stop of the robot arm operation process. The first layer may also be embodied as a redundant system where two independent systems is configured to execute the first layer of code.

The program code may further comprise a second layer of code controlling motion of the multipurpose robot arm. This part of the program code comprises the basic operation commands that within so-called soft stop threshold values are controlling the motion of the multipurpose robot arm. In contrary to hard stop, soft stop may not require complete reboot of the robot controller, but only a manually reset to continue operation when activated. If necessary in some embodiments, the integrator is allowed to access and adjust this part of the program code. However, this is not beneficial in that the basic operation command and standard operation values are carefully developed with respect to the dynamic model, balancing performance, speed and lifetime of the multipurpose robot arm and hence care should be taken when adjusting the program code.

The program code may further comprise a third layer of code controlling tool specific operation commands. This includes basic operation commands where the standard operation values are replaced by the application operation values and in addition tool specific operation commands may be used. The integrator is allowed to adjust code in this layer when running-in the multipurpose robot arm. This is especially true if the adjustments of application operation values are only allowed with predetermined ranges.

As described above, the multipurpose robot arm facilitates control of a plurality of different robot tools. The robot tools are specifically developed to carry out a particular task and when attached to the robot tool flange dedicates the multipurpose robot arm to a solve a specific problem or carry out a specific task. Accordingly, the multipurpose robot arm can be transformed into a welding robot arm, a handling robot arm, a cutting robot arm, a machine tending robot arm, an assembling robot arm, a quality robot arm, a material robot arm, a material adding robot arm for just to mentioned some of the possible ways of transforming the multipurpose robot arm into a specific robot arm. As indicated, the specific type of robot arm is determined by the robot tool attached to the robot tool flange.

Typically, the robot tool attached to the robot tool flange requires interaction with the robot controller. Interaction should be understood as the tool communicates with the robot controller and vice versa. From the robot controller the communication is typically established by program code dedicated to the mounted robot tool together with program code dedicated to the control of the multipurpose robot arm. Non-limiting examples of the latter could be basic operation commands which when executed facilitates motion of the robot arm by control of the robot joints 103 and the joint motors 217. From the robot tool communication is typically established by via digital or analog input / output signals communicated between the tool I/O and the controller I/O. The tool I/O may further comprise power terminals for powering a robot tool. Examples of communication between robot tool and sensors related hereto and the robot controller is illustrated on and described in relation to fig. 1.

Hence, the robot controller controls the robot tool e.g. by controlling current to a tool I/O and changing status of output ports of the tool I/O interface and thereby sending e.g. an "open signal" to a valve of the robot tool allowing the robot tool to spray, weld, squeeze, etc.

In addition to the basic operation commands controlling movements of the multipurpose robot arm, the program code executed by the robot controller may also include tool specific operation commands. The tool specific operation commands are commands that are developed specifically to the tool attached to the robot tool flange. The tool specific operation commands are commands which are not required for controlling basic motion of the multipurpose robot arm i.e. could be controlling a particular functionality of the robot tool. Hence, when a robot tool is attached it may be controlled solely by the basic operation commands or by a combination of basic operation commands and the tool specific operation commands.

When controlling some robot tools, the settings of standard operation values and thereby the window of allowed operation is not sufficient to comply with quality or appearance of the result of the job carried out by the robot tool. This problem can be solved by controlling the robot tool in an application mode of operation. During times where the robot is controlled in the application mode, the application mode overrides or updates the standard operation values used when the robot arm is controlled according to the basic operation commands.

Typically, the requirements to the final result of the work of the robot tool is known and therefore, based on this information, the integrator installing and commissioning the robot arm is aware when to control the robot arm according to standard mode of operation (i.e. by basic operation commands using standard operation values) and when to control according to application specific mode of operation (i.e. by tool specific operation commands and / or basic operation commands using application operation values).

When it is determined to control part of a robot operation process of the robot arm according to an application specific mode of operation it is required to also determine if the relevant operation parameters can be used with standard operation values. As indicated, this may not always be the case and therefore one or more of the standard operation values are updated with a tool operation parameter by controlling the robot arm in the application specific operation mode.

Which of the operation parameters and operation values hereof that needs to be updated with application operation values (and to which values) can be(pre)determined by a programmer during development of the robot tool or integration of the robot tool to the multipurpose robot arm at a research and development department. Later, the integrator may adjust the application operation values e.g. via a trial and error process when the multipurpose robot arm is installed in the robot cell where it is to carry out its task or both.

Predetermined application operation values means that they are determined or estimated before installing the multipurpose robot arm in its robot cell. This means that when using application specific operation mode program code, the relevant operation parameters are already updated with the application operation values. Hence, in this situation, the multipurpose robot arm is operated as a specific robot arm when the robot controller executes this program code. This is not only advantageous but also in most cases necessary in that the integrator most likely does not have in-depth knowledge of the dynamics of a multipurpose robot and therefore is not aware of which parameter to adjust the values of in order to obtain a desired effect. In fact, adjusting one parameter, may have non-desired effect on not aimed functionalities. The predetermined establishing of operation values are advantageous in that the integrator does not have to use time on programming. If programming is to be made by the integrator it is just adjusting operation values or combining the predetermined basic operation commands in either standard and / or application mode of operation. Thereby the integrator can setup the robot arm more efficiently and with less risk of operation failures.

This is illustrated by a simple example, of a requirement to suppress undesired vibrations. The user or the integrator is typically able to register such vibrations, but none on them know which operation parameters / operation values that needs to be adjusted to suppress the vibrations. In addition, at least not the user, but most likely neither the integrator has access to where in the program code the relevant parameters are to be adjusted to suppress the vibrations. This problem is solved by the present invention by including in the program code specialized application specific mode of operation of which the operation values are designed to optimize control of any robot tool, in this case to suppress vibrations independent of which robot tool that is mounted on the robot arm.

It should be mentioned that the basic operation commands and tool specific operation commands of the application specific mode of operation may also be optimized to a particular movement or task that can be used by a plurality of different robot tools. Such optimization at least includes changing operation values of operation parameters for movements commands used in the (second) subset of operation parameters of the application specific mode of operation compared to the same operation parameters used in the standard mode of operation. Hence, in the example of vibration suppression, a particular vibration suppressing mode of operation can be designed and used to optimize the movement of the multipurpose robot arm for steady movement of any kind of the robot tool.

With this said, the integrator may evaluate the final result of the work of the robot tool with a representative from the owner of the multipurpose robot arm and if needed adjust one or more of the application operation values.

In an embodiment, it is only possible for the integrator to adjust the values of the operation parameters defined by or used in the application specific operation mode. Operation values of operation parameters used in standard mode of operation may not be adjusted. This is because then the risk of adjusting something that compromises safety or robot component health is reduced.

If any of the operation values are allowed to be adjusted, an allowed window of operation values may be predetermined for each of the relevant operation parameters. Hence, no matter which operation value used in any operation mode, there will preferably be an allowed window of operation of the operation parameters to ensure that at least the hard stop values are not reached. Again, this ensures operation complying with required safety and load of robot components.

The application mode of operation is entered when the robot tool is in a predetermined position. This position may be the position of the robot tool at or just before activation of the robot tool. It may be a position reached by the robot tool after it has been activated. This may be the case if requirements to a particular part of the robot operation process is higher than to other parts of the robot operation process. The robot controller may know this position from information in the program code provided by the integrator or from input from force sensors 109, acceleration sensors 115, etc.

Further, the application mode of operation may also be entered when program code has reached a particular point in program code or at a particular program node. Finally, it should be mentioned that during one robot operation process, the robot controller may change mode of operation between standard and application mode several times. This might be the case e.g. if a welding tool has to weld several times ad different location of an object. In this situation the application mode may be entered each time the welding tool is activated.

From the above, it is understood that when a tool is mounted, it can be said to be operated in what can be referred to as the regime of multipurpose control, which can be sufficient for a whole range of tasks / tools. However, for some applications it might not be sufficient to control the robot tool according to the multipurpose regime / settings to obtain a desired or required result of the job carried out by the robot tool.

To solve this problem, according to the present invention, robot tools that are possible to mount on the robot tool flange are divided into several main tool groups each comprises several sub-tool groups, see table 1 below. The inventors of the present invention have also defined basic operation commands of which particular operation parameters that may require an updated (tool) operation value, suggestions for such updated application operation values and duration of time the multipurpose robot arm is allowed to be operated according to the application operation values. The duration should be understood as a period of time where the multipurpose robot arm is allowed to be operated according to the application operation value, there might be several of such "durations" during one robot operation process.

Table 1: Main tool groups with sub-tool groups.

| Main tool group | Sub-tool group |
|---|---|
| Cutting | Laser |
| | Waterjet |
| | Plasma |
| Welding | Tig |
| | Laser |
| | Ultrasonic |
| | Plasma |
| | Spot |
| | Soldering |
| Quality | Inspection |
| | Measuring |
| | Testing |
| | Metrology |
| Material Removal | Deburring |
| | Milling |
| | Polishing |
| | Routing |
| | Drilling |
| Machine tending | CNC |
| | Metal cast. |
| | IMM |
| | Pressing |

(continued)

| Main tool group | Sub-tool group |
|---|---|
| Assembly | Inserting |
| | Mounting |
| | Positioning |
| | Screwing |
| | Clinching |
| | Riveti ng |
| | Pressing |
| | Winding |
| | Snapping |
| | Routing (cable) |
| Handling | Transferring |
| | Sorting |
| | Packaging |
| | Palletizing |
| | Labelling |
| | Assisted handling (lifting) |
| | Electronics handling |
| Material addition | Dispensing |
| | Painting |
| | Dipping |

Non-limiting examples of settings of various application specific mode of operation:

Example 1

| Mail tool group: **Cutting** | | | |
|---|---|---|---|
| Sub-tool group: **Laser** | | | |
| **Operation command** | **Operation parameter** | **Operation value** | **Duration** |
| Motion type | Linear motion | Yes | While cutting |
| | Max speed | 0-2 m/s | While cutting |
| | Motion trajectory optimizing | Sequence of waypoints | While cutting |
| Orientation type | Lock orientation | Orientation of part of robot e.g. TCP orientation | While laser is turned on |

(continued)

| Mail tool group: **Cutting** | | | |
|---|---|---|---|
| Sub-tool group: **Laser** | | | |
| **Operation command** | **Operation parameter** | **Operation value** | **Duration** |
| vibration damping | Motion control optimization | Max speed<br>Inertia<br>Motor torque<br>Motor current<br>Control parameters<br>Eigenfrequencies | While cutting |

Example 2

| Mail tool group: **Cutting** | | | |
|---|---|---|---|
| Sub-tool group: **Waterjet** | | | |
| **Operation command** | **Operation parameter** | **Operation value** | **Duration** |
| Motion type | Linear motion | Yes | While cutting |
| | Max speed | 0-2 m/s | While cutting |
| | Motion trajectory optimizing | Sequence of waypoints | While cutting |
| Orientation type | Lock orientation | Orientation of part of robot e.g. TCP orientation | While water jet is turned on |
| Force Handling | Range of allowed forces on robot arm | 0-200N | While water jet is turned on |
| Torque Handling | Range of allowed torques on robot arm | 0-200NM | While water jet is turned on |

Example 3

| Mail tool group: **Assembly** | | | |
|---|---|---|---|
| Sub-tool group: **Screwing** | | | |
| **Operation command** | **Operation parameter** | **Operation value** | **Duration** |
| Motion type | Linear motion | Yes | While screwing |
| | Max speed | 0-1 m/s | While screwing |
| | Direction of movement | Axis in screwing direction only allowed axis of movement | While screwing |
| Torque Handling | First range of allowed torques | 0-200NM | Upon starting of screwing tool |
| Torque Handling | Second range of allowed torques | 0-100Nm | While driving screw |

(continued)

| Mail tool group: **Assembly** | | | |
| Sub-tool group: **Screwing** | | | |
| **Operation command** | **Operation parameter** | **Operation value** | **Duration** |
| Torque Handling | Third range of allowed torques | 0-300nM | While tightening screw |

Example 4

| Mail tool group: **Assembly** | | | |
| Sub-tool group: **Snapping** | | | |
| **Operation command** | **Operation parameter** | **Operation value** | **Duration** |
| Adaptive compliance | Compliance/stiffness parameter | Robot stiffness (typical decreased in relation to stand mode of operation) | While inserting |
| Torque Handling | First range of allowed torques | 0-200Nm | Upon snapping |
| Force Handling | First range of allowed forces | 0-200 N | Upon snapping |
| Torque Handling | Second range of allowed torques | -200-100 Nm | When snap is engaged |
| force Handling | Second range of allowed forces | -200-100 Nm | When snap is engaged |

Table 2 illustrates a non-exhaustive list of operation commands and settings that are used in the control of a multipurpose robot arm. Some of the listed operation values are only relevant when a specific robot tool is mounted on the robot tool flange. In the comment column some notes are mentioned to explain the type of operation value and within which tool group they are relevant. It is noted, that there are not comments to all operation values in that some are self-explaining to a skilled person.

Table 2

| Operation commands | Comments / at least relevant for: |
| --- | --- |
| Force handling/ direction | Cutting, Welding, Quality, Material removal, Machine tending, Assembly, Handling |
| Movement direction | Cutting, Welding, Quality, Material removal, Machine tending, Assembly, Handling, Material addition |
| Analog settings (I/O settings) | Cutting, Welding, Quality, Material removal, Machine tending, Assembly, Handling, Material addition |
| Realtime path offset | Cutting, Welding, Material removal, Assembly, Material addition |
| High peak torque | Cutting, Welding, Material removal, Machine tending, Assembly, Handling |
| Torque handling/ compensation | Cutting, Welding, Material removal, Assembly Expected known torque, polishing, screwing, removal |
| Adaptive compliance | Cutting (more stiff), Material removal (more stiff), Assembly (more compliant), |
| Sensitivity | React more/less on external interaction, high/low sensor sensitivity Cutting, Welding, Quality, Material removal, Machine tending, Assembly, Handling, Material addition |

(continued)

| Operation commands | Comments / at least relevant for: |
|---|---|
| Accuracy | High if e.g. a particular path is to be followed<br>Cutting, Welding, Quality, Material removal, Machine tending, Assembly, Handling, Material addition |
| Precision | Typically, slower motion if high precision is required<br>Cutting, Welding, Quality, Material removal, Machine tending, Assembly, Handling, Material addition |
| Noise | Typically, reduce accelerations and slower speed<br>Cutting, Welding, Quality, Material removal, Machine tending, Assembly, Handling, Material addition |
| Trajectory optimization | Optimizing trajectory when robot arm are supposed to follow a defined trajectory, for instance a sequence of waypoints<br>Cutting, Welding, Quality, Material removal, Machine tending, Assembly, Handling, Material addition |
| Vibration damping | Optimize motions of robot arm by reducing vibrations of parts of robot arm or robot tool<br>Cutting, Welding, Quality, Material removal, Machine tending, Assembly, Handling, Material addition |
| Orientation type | The orientation of parts of the robot arm and/or robot tool can be locked or limited to a certain range of orientations.<br>Cutting, Welding, Quality, Material removal, Machine tending, Assembly, Handling, Material addition |
| Braking | Time from stop command to actual stop of robot arm<br>Material removal, Machine tending, Assembly, Handling |
| Smooth Motion | Smooth motion, vibration suppression<br>Cutting, Welding, Quality, Material removal, Assembly, Handling, Material addition |
| Speed | High speed leads often to less accuracy and precision and more vibrations<br>Quality, Material removal, Machine tending, Assembly, Handling |
| Physical location | Avoiding moving in restricted areas, relevant e.g. in relation to food and some process operations.<br>Cutting, Welding, Quality, Material removal, Machine tending, Assembly, Handling, Material addition |
| Tool condition | Activation and disabling Cutting, Welding, Quality, Material removal, Machine tending, Assembly, Handling, Material addition |
| Movement energy | Energy in terms of inertia, assembly, assistance, mounting<br>Cutting, Welding, Quality, Material removal, Machine tending, Assembly, Handling, Material addition |
| Movement behavior | Blend types of movement<br>Cutting, Welding, Quality, Material removal, Machine tending, Assembly, Handling, Material addition |
| Temperature | Allowed surface temperatures of robot arm and/or tool<br>Cutting, Welding, Quality, Material removal, Machine tending, Assembly, Handling, Material addition |
| Current/power consumption | Peek current, battery optimized, max continued current in applications with restricted power source/capacity.<br>Cutting, Welding, Quality, Material removal, Machine tending, Assembly, Handling, Material addition |

(continued)

| Operation commands | Comments / at least relevant for: |
|---|---|
| UPS | Setting conditions for Power time out or loss of power. E.g. Low power when running on battery/ups Cutting, Welding, Quality, Material removal, Machine tending, Assembly, Handling, Material addition |
| EMI / EMC | Reduce EMI/EMC of robot arm and/or robot tool in application specific mode of operation. For instance, reducing switching current, turning noising part of the robot arm robot tool.<br>EMI / EMC sensitive areas, electronics handling<br>Quality, Material removal, Machine tending, Assembly, Handling, Material addition |

The generic program code developed to the multipurpose robot arm may not allow e.g. a welding process carried out with a sufficient accuracy, and / or precision. In this situation, when mounting and controlling a welding tool this may be done partly by application specific program code that might be delivered from the third party delivering the welding tool. Such application specific program code interfaces the program code of the data package delivered with the multipurpose robot arm. Accordingly, the multipurpose robot arm is now operated in the regime of a special welding robot where the application specific program code is considered a "third layer of program code" making use of the basic operation commands of the "second layer of program code". However, as explained above, the basic operation commands may not be sufficient to operate the welding tool or the operation values defining an allowed window of operation and thereby limiting the basic operation commands may not be optimized to control welding tools.

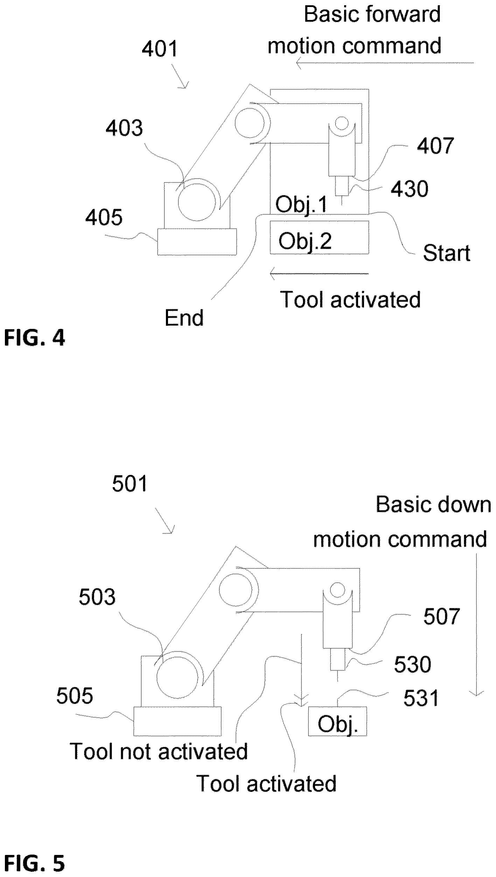

In an embodiment as illustrated in fig. 4, a welding tool 430 is mounted on the robot tool flange 407 making the multipurpose robot arm 401 to a welding robot arm. Therefore, when activating the welding tool 430, the welding robot enters the application specific operation mode. Fig. 4 illustrates the welding tool 430 which is to weld object 1 and object 2 together. As mentioned, in the application specific mode of operation, at least part of the basic operation commands is used with application operation values (second subset from fig. 3). Further, this mode of operation may also include tool specific operation commands (not illustrated on fig. 3).

More specific, in a specific embodiment, the welding robot is controlled according to the basic forward operation command which is therefore part of both the first and second subset of basic operation commands. When used in the application specific mode of operation i.e. when the welding tool is activated (tool activated on fig. 4), it is with an application operation value for basic forward operation command that defines a lower operation speed (e.g. 0.1-0.3m/s). This operation speed is lower compared to the operation speed used in the same or similar basic forward operation command used in the standard mode of operation when the welding tool 430 is moved to point of start of welding i.e. when the welding tool is not activated (e.g. 0.3-0.5m/s).

Another specific embodiment is when a screwing tool 531 is mounted on the robot tool flange 507 making the multipurpose robot arm 501 to a screwing robot arm, see fig. 5. Operating a screwing tool according to standard operation values may cause problems with too high force and torque distributed from the screwing tool to the robot joints due to inertia from accelerating and decelerating the speed of the screwing tool.

Accordingly, just prior to activating the screwing tool (tool not activated on fig. 5) e.g. when the screwing tool is positioned in front of the screw 532 and the screwing tool is activated (tool activated on fig. 5) the regime changed from standard mode of operation to application mode of operation and thereby the basic "down" operation command which are part of both the standard and application specific mode of operation is then controlled according to an application operation valued for allowed torque acting on the robot joints. This application operation value may have one value (e.g. 200 Nm) in the application specific operation mode relating to a screw drawing application and have a different value (e.g. 300) in the tool specific operation mode relating to the specific screwing tool attached to the robot arm. Hence as long as the screwing tool is active, the limits for force and torque acting on the robot joints are adjusted to allow higher torque compared to when the screwing tool is not activated.

For instance, the robot arm illustrated in fig. 1 and 2 may be provided with a screwing tool and in the application mode of operation where the screwing tool is configured to fasten the screw the robot controller may be configured to move the robot tool joint in the fastening direction of the screw whereby screwing tool will follow the screw during the fastening process. Further the robot controller may be configured to monitor the torque provided to the robot tool flange by sensing the torque using the force-torque sensor 109. In case a torque is sensed, the robot controller will in the application mode of operation switch the robot arm into a mode of operation allowing and compensating for the sensed torque. For instance, by providing an application operation value specifying an increased torque limit compared to the standard mode of operation.

In the general, explained with reference to the example of the screwing robot, the so-called process force i.e.

the forces introduced by operation of the robot tool (inertia from rotation and start / stop hereof) are cancelled out by the value, the standard operation value is changed with when it is changed from its standard operation value to its application operation value. This means that in the screwing example, the screwing robot will reach the soft stop threshold value (may also by referred to as upper limit for allowed window of operation) by an impact from an external force (e.g. from collision with a person) applying the same force to the screwing robot both when operated in the standard and in the application specific mode of operation. Accordingly, the application operation value may be determined by the size of the expected process force applied from a robot tool.

From the above it is now clear that the present invention relates to multipurpose robot that can be operated as a specific application robot. This is obtained by adjusting operation values thereby changing the allowed window of operation of one or more operation values. The change of the allowed window of operation may restrict or expand the limits of allowed operation of the multipurpose robot arm / robot tool during part of a robot operation process. The part of the operation mode where the allowed window of operation is changed is referred to as specific application mode of operation. One difference between the standard mode of operation and the specific application mode of operation is that in the latter, one or more standard operation values are updated to tool specific operation values.

Operation of the multipurpose robot arm in the specific application mode of operation, i.e. where standard operation values is allowed to be updated, may be allowed when the robot tool in the robot cell is within a virtual defined area. An example hereof is between two specific positions of the robot tool in the robot cell. Accordingly, the user adjustable limits, i.e. values of the operation parameters defining the window of operation in the application specific mode of operation, is monitored by the robot controller. If for some unexpected reason these limits are not violated or a violation is not registered, and the value violates a hard stop threshold value for the particular or other operation parameter(s), the robot controller performs a hard stop of the robot arm.

Hence, by control of a multipurpose robot arm according to the present invention, it is possible to increase quality, accuracy, precision, speed and appearance of a task performed by the robot tool.

Further, robot tools which before were not possible to fully exploit can now by the present invention be fully exploited. An example is a screwing tool which when starting and stopping exposes the multipurpose robot arm to a force acting on the robot joints. This force increases with speed of screwing and with an increase of the torque with which the screw is fastened. Accordingly, to fully exploit e.g. speed of a screwing tool and thereby reduce the time it takes for a robot operation process, the upper limit of an allowed torque operation value is increased for just the time the screwing tool is in operation.

This can be allowed without compromising safety in that the screwing operation is made at a known location in the robot cell where increased torque can only come from the robot tool and not from collision with obstacles such as a human.

It should be mentioned that the new upper limit should be chosen as a compromise between benefits obtained hereof and damages or wear e.g. a higher torque may cause the robot components.

Accordingly, a robot arm can be operated according to at least two modes of operation. In these modes of operation, the robot arm is using one or more of the same basic operation commands, however, the operation values defining the basic operation command are not identical in the two modes of operation. In a standard mode of operation, the operation value are standard values whereas the operation values used in the application mode of operation allows a more flexible operation of the robot tool. Flexible should here be understood as including more or less restricted optimized to a certain performance (faster, more accurate, etc.).

**BRIEF DESCRIPTION OF FIGURE REFERENCES**

| 101, 401, 501 | robot arm |
|---|---|
| 102 | robot controller |
| 103a-103f | robot joint |
| 104 | interface device |
| 105 | robot base |
| 106 | display |
| 107 | robot tool flange |
| 108 | input devices |
| 109 | force sensor |

(continued)

| 110 | reference point |
|---|---|
| 111a-111f | axis of robot joints |
| 112 | direction of gravity |
| 113a-113f | rotation arrow of robot joints |
| 115 | acceleration sensor |
| 216a; 216b; 216f | output flange |
| 217a; 217b; 217f | joint motors |
| 218a; 218B, 218f | output axle |
| 219a; 219b; 219f | joint sensor |
| 220 | processor |
| 221 | memory |
| 222a; 222b; 222f | joint sensor signal |
| 223a, 223b, 223f | motor control signals |
| 224 | force signal |
| 225 | acceleration signal |
| 430 | welding tool |
| 531 | screwing tool |
| 532 | Screw |

## Claims

1. A multipurpose robot arm (101) comprising a plurality of robot joints (103a-103f) connecting a robot base (105) and a robot tool flange (107) of said multipurpose robot arm (101), said multipurpose robot arm comprises a robot controller (102) configured to control the multipurpose robot arm (101) in a standard mode of operation and in an application specific operation mode during a part of a robot arm operation process,

   wherein the robot controller (102) is configured to control the multipurpose robot arm (101) during the robot arm operation process according to a plurality of predetermined basic operation commands, the basic operation commands are at least partly defined by one or more operation parameters,
   wherein the robot controller (102) is configured to control the multipurpose robot arm (101) in the standard mode of operation during a part of the robot arm operation process according to a first subset of the basic operation commands, wherein at least one of the one or more operation parameters defining the basic operation commands of the first subset is limited by at least one standard operation value,
   wherein the robot controller (102) is configured to control the multipurpose robot arm (101) in the application specific operation mode during a part of the robot arm operation process according to a second subset of the basic operation commands, wherein basic operation commands of the second subset is at least partly comprised by the first subset of basic operation commands and wherein at least one of the one or more operation parameters defining the basic operation commands of the second subset is limited by at least one application operation value,
   wherein an allowed window of operation of the multipurpose robot arm when operated according to the basic operation commands defined by the standard operation value is different from the allowed window of operation of the multipurpose robot arm when operated according to the basic operation commands defined by the application operation value,
   wherein a window of operation is the values of a range of operation parameters defining limits for the operation of the robot arm, and
   wherein the application operation value is defined by a desired property of the operation of the multipurpose robot arm (101) in the application specific operation mode,
   wherein the desired property is determined by a robot tool (430, 531) mounted on the robot tool flange (107)

**EP 3 976 323 B1**

thereby adjusting an allowed window of operation of a certain operation parameter.

2. A multipurpose robot arm (101) according to claim 1, wherein the robot controller (102) is configured to control the multipurpose robot arm (101) in the standard mode of operation during a first part of the operation process, in the application specific mode of operation during a subsequent part of robot arm operation process and again in the standard mode of operation during a final part of the robot arm operation process.

3. A multipurpose robot arm (101) according to claims 1 or 2, wherein the robot controller (102) is configured to only control the multipurpose robot arm (101) in the application specific mode of operation when the robot tool (430, 531) is active.

4. A multipurpose robot arm (101) according to any one of claims 1-3, wherein the application mode of operation further comprises tool specific operation commands.

5. A multipurpose robot arm (101) according to any one of claims 1-4, wherein the robot controller (102) is configured to control at least one of the basic operation commands of the second subset, which are also part of the first subset of basic operation commands, according to application operation value.

6. A multipurpose robot arm (101) according to any one of claims 1-5, wherein the application operation value of a force operation parameter is determined by establishing expected process force or expected process torques applied from the robot tool (430, 531).

7. A multipurpose robot arm (101) according to any one of claims 1-6, wherein the multipurpose robot arm (101), with a robot tool (430, 531), in a first robot arm operation process, is controlled with a first set of application operation values and in a second robot arm operation process is controlled with a second set of application operation values.

8. A multipurpose robot arm (101) according to any one of claims 1-7, wherein the application operation value is a soft stop value, and wherein the robot controller (102) is configured to stop the operation of the multipurpose robot if the soft stop value is crossed.

9. A multipurpose robot arm (101) according to any one of claims 1-8, wherein the standard operation values and the application operation values are predetermined for a plurality of basic operation commands.

10. A multipurpose robot arm (101) according to any one of claims 1-9, wherein the standard operation values and a plurality of different application operation values are predetermined for at least one basic operation command.

11. A multipurpose robot arm (101) according to any one of claims 1-10, wherein operation values of basic operation commands used in the application specific operation mode are predetermined and compared to operation values of the basic same operation commands used in the standard mode of operation are less restrictive.

12. A multipurpose robot arm (101) according to any one of claims 1-11, wherein the operation values used in the standard mode of operation are protected from changes.

13. A multipurpose robot arm (101) according to any one of claims 1-12, wherein the operation values are allowed to be adjusted within a predetermined window defined by hard stop threshold values.

14. A method of controlling a multipurpose robot arm (101) comprising a plurality of robot joints (103) connecting a robot base (105) and a robot tool flange (107) of said multipurpose robot arm (101), said multipurpose robot arm (101) comprises a robot controller (102) controlling the multipurpose robot arm (101) in a robot arm operation process according to:

- a first level program code monitoring operation values of operation parameters during operation of the multipurpose robot arm (101), wherein the first level control initiates hard stop of operation of the multipurpose robot arm (101) if an operation value is outside a predetermined safety range,
- second level program code controlling basic motions of the multipurpose robot arm (101), according to basic operation commands defined by said operation parameters having standard operation values, and
- third level application program code controlling basic motions of the multipurpose robot arm (101), according to basic operation commands defined by said operation parameters having application operation values,

23

wherein during a first part of a robot arm operation process, the multipurpose robot arm (101) is controlled by the second level program code by a plurality of basic operation commands defined by the standard operation values,

wherein during the first part of the robot arm operation process, the multipurpose robot arm is controlled in a standard mode of operation according to a first subset of the basic operation commands defined by one or more operation parameters having standard operation values,

wherein during a second part of the robot arm operation process, the multipurpose robot arm (101) is controlled by the third level application program code,

wherein during the second part of the robot arm operation process, the multipurpose robot arm is controlled in an application specific operation mode of operation according to a second subset of the basic operation commands defined by one or more operation parameters having application operation values,

wherein the third level application program code is determined by a desired property of the operation of the multipurpose robot arm (101) in the application specific operation mode,

wherein the desired property is determined by a robot tool (430, 531) mounted on the robot tool flange (107) thereby adjusting an allowed window of operation of a certain operation parameter,

wherein a window of operation is the values of a range of operation parameters defining limits for the operation of the robot arm

wherein during the first and second part of the robot arm operation process, the robot arm is furthermore monitored by the first level program code.

15. A method of controlling a multipurpose robot arm (101) according to claim 14, wherein the method comprises a pre-operation step of defining a value for one or more operation parameters defining a window of operation used by the robot controller when operating the robot arm in the application specific mode of operation.

## Patentansprüche

1. Mehrzweckroboterarm (101), umfassend eine Vielzahl von Robotergelenken (103a-103f), die eine Roboterbasis (105) und einen Roboterwerkzeugflansch (107) des Mehrzweckroboterarms (101) verbinden, wobei der Mehrzweckroboterarm eine Robotersteuerung (102) umfasst, die konfiguriert ist, um den Mehrzweckroboterarm (101) in einem Standardbetriebsmodus und in einem anwendungsspezifischen Betriebsmodus während eines Teils eines Roboterarmbetriebsprozesses zu steuern,

wobei die Robotersteuerung (102) konfiguriert ist, um den Mehrzweckroboterarm (101) während des Roboterarmbetriebsprozesses gemäß einer Vielzahl von vorbestimmten Basisbetriebsbefehlen zu steuern, wobei die Basisbetriebsbefehle mindestens teilweise durch einen oder mehrere Betriebsparameter definiert sind,

wobei die Robotersteuerung (102) konfiguriert ist, um den Mehrzweckroboterarm (101) in dem Standardbetriebsmodus während eines Teils des Roboterarmbetriebsprozesses gemäß einer ersten Teilmenge der Basisbetriebsbefehle zu steuern, wobei mindestens einer des einen oder der mehreren Betriebsparameter, die die Basisbetriebsbefehle der ersten Teilmenge definieren, durch mindestens einen Standardbetriebswert begrenzt ist,

wobei

die Robotersteuerung (102) konfiguriert ist, um den Mehrzweckroboterarm (101) in dem anwendungsspezifischen Betriebsmodus während eines Teils des Roboterarmbetriebsprozesses gemäß einer zweiten Teilmenge der Basisbetriebsbefehle zu steuern, wobei die Basisbetriebsbefehle der zweiten Teilmenge mindestens teilweise durch die erste Teilmenge der Basisbetriebsbefehle umfasst sind und wobei mindestens einer des einen oder der mehreren Betriebsparameter, die die Basisbetriebsbefehle der zweiten Teilmenge definieren, durch mindestens einen Anwendungsbetriebswert begrenzt ist,

wobei sich ein zulässiges Betriebsfenster des Mehrzweckroboterarms bei Betrieb gemäß den Basisbetriebsbefehlen, die durch den Standardbetriebswert definiert sind, von dem zulässigen Betriebsfenster des Mehrzweckroboterarms bei Betrieb gemäß den Basisbetriebsbefehlen, die durch den Anwendungsbetriebswert definiert sind, unterscheidet,

wobei ein Betriebsfenster die Werte eines Bereichs von Betriebsparametern sind, die Grenzen für den Betrieb des Roboterarms definieren, und

wobei der Anwendungsbetriebswert durch eine gewünschte Eigenschaft des Betriebs des Mehrzweckroboterarms (101) in dem anwendungsspezifischen Betriebsmodus definiert ist,

wobei die gewünschte Eigenschaft durch ein Roboterwerkzeug (430, 531) bestimmt wird, das an dem Roboterwerkzeugflansch (107) montiert ist, wodurch ein zulässiges Betriebsfenster eines spezifischen Betriebsparameters angepasst wird.

2. Mehrzweckroboterarm (101) nach Anspruch 1, wobei die Robotersteuerung (102) konfiguriert ist, um den Mehrzweckroboterarm (101) in dem Standardbetriebsmodus während eines ersten Teils des Betriebsprozesses, in dem anwendungsspezifischen Betriebsmodus während eines nachfolgenden Teils des Roboterarmbetriebsprozesses und erneut in dem Standardbetriebsmodus während eines letzten Teils des Roboterarmbetriebsprozesses zu steuern.

3. Mehrzweckroboterarm (101) nach Anspruch 1 oder 2, wobei die Robotersteuerung (102) konfiguriert ist, um den Mehrzweckroboterarm (101) in dem anwendungsspezifischen Betriebsmodus nur dann zu steuern, wenn das Roboterwerkzeug (430, 531) aktiv ist.

4. Mehrzweckroboterarm (101) nach einem der Ansprüche 1 bis 3, wobei der Anwendungsbetriebsmodus außerdem werkzeugspezifische Betriebsbefehle umfasst.

5. Mehrzweckroboterarm (101) nach einem der Ansprüche 1 bis 4, wobei die Robotersteuerung (102) konfiguriert ist, um mindestens einen der Basisbetriebsbefehle der zweiten Teilmenge, die ebenso Teil der ersten Teilmenge von Basisbetriebsbefehlen sind, entsprechend dem Anwendungsbetriebswert zu steuern.

6. Mehrzweckroboterarm (101) nach einem der Ansprüche 1 bis 5, wobei der Anwendungsbetriebswert eines Kraftbetriebsparameters durch ein Herstellen von erwarteter Prozesskraft oder von erwarteten Prozessdrehmomenten, die von dem Roboterwerkzeug (430, 531) angewendet werden, bestimmt wird.

7. Mehrzweckroboterarm (101) nach einem der Ansprüche 1 bis 6, wobei der Mehrzweckroboterarm (101) mit einem Roboterwerkzeug (430, 531) in einem ersten Roboterarmbetriebsprozess mit einem ersten Satz von Anwendungsbetriebswerten gesteuert wird und in einem zweiten Roboterarmbetriebsprozess mit einem zweiten Satz von Anwendungsbetriebswerten gesteuert wird.

8. Mehrzweckroboterarm (101) nach einem der Ansprüche 1 bis 7, wobei der Anwendungsbetriebswert ein Soft-Stopp-Wert ist und wobei die Robotersteuerung (102) konfiguriert ist, um den Betrieb des Mehrzweckroboters zu stoppen, falls der Soft-Stopp-Wert überschritten wird.

9. Mehrzweckroboterarm (101) nach einem der Ansprüche 1 bis 8, wobei die Standardbetriebswerte und die Anwendungsbetriebswerte für eine Vielzahl von Basisbetriebsbefehlen vorbestimmt sind.

10. Mehrzweckroboterarm (101) nach einem der Ansprüche 1 bis 9, wobei die Standardbetriebswerte und eine Vielzahl von unterschiedlichen Anwendungsbetriebswerten für mindestens einen Basisbetriebsbefehl vorbestimmt sind.

11. Mehrzweckroboterarm (101) nach einem der Ansprüche 1 bis 10, wobei Betriebswerte von Basisbetriebsbefehlen, die in dem anwendungsspezifischen Betriebsmodus verwendet werden, vorbestimmt sind und im Vergleich zu Betriebswerten der gleichen Basisbetriebsbefehle, die in dem Standardbetriebsmodus verwendet werden, weniger restriktiv sind.

12. Mehrzweckroboterarm (101) nach einem der Ansprüche 1 bis 11, wobei die Betriebswerte, die in dem Standardbetriebsmodus verwendet werden, vor Änderungen geschützt sind.

13. Mehrzweckroboterarm (101) nach einem der Ansprüche 1 bis 12, wobei die Betriebswerte innerhalb eines vorbestimmten Fensters angepasst werden können, das durch Hart-Stopp-Schwellenwerte definiert ist.

14. Verfahren zum Steuern eines Mehrzweckroboterarms (101), umfassend eine Vielzahl von Robotergelenken (103), die eine Roboterbasis (105) und einen Roboterwerkzeugflansch (107) des Mehrzweckroboterarms (101) verbinden, wobei der Mehrzweckroboterarm (101) eine Robotersteuerung (102) umfasst, die den Mehrzweckroboterarm (101) in einem Roboterarmbetriebsprozess gemäß Folgendem steuert:

- einem Programmcode der ersten Ebene, der Betriebswerte von Betriebsparametern während des Betriebs des Mehrzweckroboterarms (101) überwacht, wobei die Steuerung der ersten Ebene einen Hart-Betriebsstopp des Mehrzweckroboterarms (101) einleitet, falls ein Betriebswert außerhalb eines vorbestimmten Sicherheitsbereichs liegt,

- Programmcode der zweiten Ebene, der Basisbewegungen des Mehrzweckroboterarms (101) gemäß Basisbetriebsbefehlen steuert, die durch die Betriebsparameter definiert sind, die Standardbetriebswerte aufweisen, und

- Anwendungsprogrammcode der dritten Ebene, der Basisbewegungen des Mehrzweckroboterarms (101) gemäß den Basisbetriebsbefehlen steuert, die durch die Betriebsparameter definiert sind, die Anwendungsbetriebswerte aufweisen,

wobei während eines ersten Teils eines Roboterarmbetriebsprozesses der Mehrzweckroboterarm (101) durch den Programmcode der zweiten Ebene durch eine Vielzahl von Basisbetriebsbefehlen gesteuert wird, die durch die Standardbetriebswerte definiert sind,

wobei während des ersten Teils des Roboterarmbetriebsprozesses der Mehrzweckroboterarm in einem Standardbetriebsmodus gemäß einer ersten Teilmenge der Basisbetriebsbefehle gesteuert wird, die durch einen oder mehrere Betriebsparameter definiert sind, die Standardbetriebswerte aufweisen,

wobei während eines zweiten Teils des Roboterarmbetriebsprozesses der Mehrzweckroboterarm (101) durch den Anwendungsprogrammcode der dritten Ebene gesteuert wird,

wobei während des zweiten Teils des Roboterarmbetriebsprozesses der Mehrzweckroboterarm in einem anwendungsspezifischen Betriebsmodus gemäß einer zweiten Teilmenge der Basisbetriebsbefehle gesteuert wird, die durch einen oder mehrere Betriebsparameter definiert sind, die Anwendungsbetriebswerte aufweisen,

wobei der Anwendungsprogrammcode der dritten Ebene durch eine gewünschte Eigenschaft des Betriebs des Mehrzweckroboterarms (101) in dem anwendungsspezifischen Betriebsmodus bestimmt wird,

wobei die gewünschte Eigenschaft durch ein Roboterwerkzeug (430, 531) bestimmt wird, das an dem Roboterwerkzeugflansch (107) montiert ist, wodurch ein zulässiges Betriebsfenster eines spezifischen Betriebsparameters eingestellt wird,

wobei ein Betriebsfenster die Werte eines Bereichs von Betriebsparametern sind, die Grenzen für den Betrieb des Roboterarms definieren

wobei während des ersten und des zweiten Teils des Roboterarmbetriebsprozesses der Roboterarm außerdem durch den Programmcode der ersten Ebene überwacht wird.

15. Verfahren zum Steuern eines Mehrzweckroboterarms (101) nach Anspruch 14, wobei das Verfahren einen vorbetrieblichen Schritt umfasst, bei dem ein Wert für einen oder mehrere Betriebsparameter definiert wird, die ein Betriebsfenster definieren, das durch die Robotersteuerung verwendet wird, wenn der Roboterarm in dem anwendungsspezifischen Betriebsmodus betrieben wird.

**Revendications**

1. Bras robotique polyvalent (101) comprenant une pluralité d'articulations robotiques (103a à 103f) reliant une base robotique (105) et une bride d'outil robotique (107) dudit bras robotique polyvalent (101), ledit bras robotique polyvalent comprend un dispositif de commande de robot (102) configuré pour commander le bras robotique polyvalent (101) dans un mode de fonctionnement standard et dans un mode de fonctionnement spécifique à la demande pendant une partie du processus de fonctionnement d'un bras robotique,

dans lequel le dispositif de commande de robot (102) est configuré pour commander le bras robotique polyvalent (101) pendant le processus de fonctionnement du bras robotique selon une pluralité d'instructions de fonctionnement de base prédéterminées, les instructions de fonctionnement de base étant au moins partiellement définies par un ou plusieurs paramètres de fonctionnement,

dans lequel le dispositif de commande de robot (102) est configuré pour commander le bras robotique polyvalent (101) dans le mode de fonctionnement standard pendant une partie du processus de fonctionnement du bras robotique, selon un premier sous-ensemble d'instructions de fonctionnement de base, dans lequel au moins l'un parmi le ou les paramètres de fonctionnement définissant les instructions de fonctionnement de base du premier sous-ensemble est limité par au moins une valeur de fonctionnement standard,

dans lequel

le dispositif de commande de robot (102) est configuré pour commander le bras robotique polyvalent (101) dans le mode de fonctionnement spécifique à la demande pendant une partie du processus de fonctionnement du bras robotique, selon un second sous-ensemble d'instructions de fonctionnement de base, dans lequel les instructions de fonctionnement de base de second sous-ensemble sont au moins partiellement comprises dans le premier sous-ensemble d' instructions de fonctionnement de base, et dans lequel au moins l'un parmi le ou les paramètres de fonctionnement définissant les instructions de fonctionnement de base du second sous-ensemble est limité par au moins une valeur de fonctionnement de la demande,

dans lequel une fenêtre de fonctionnement autorisée du bras robotique polyvalent lorsqu'il fonctionne selon les instructions de fonctionnement de base définies par la valeur de fonctionnement standard est différente de la fenêtre de fonctionnement autorisée du bras robotique polyvalent lorsqu'il fonctionne selon les instructions de fonctionnement de base définies par la valeur de fonctionnement de la demande,

dans lequel une fenêtre de fonctionnement correspond aux valeurs d'une gamme de paramètres de fonctionnement définissant les limites du fonctionnement du bras robotisé, et

dans lequel la valeur de fonctionnement de la demande est définie par une propriété souhaitée du fonctionnement du bras robotique polyvalent (101) dans le mode de fonctionnement spécifique à la demande,

dans lequel la propriété souhaitée est déterminée par un outil robotique (430, 531) monté sur la bride de l'outil robotique (107), ce qui permet d'ajuster une fenêtre de fonctionnement autorisée pour un certain paramètre de fonctionnement.

2. Bras robotique polyvalent (101) selon la revendication 1, dans lequel le dispositif de commande de robot (102) est configuré pour commander le bras robotique polyvalent (101) en mode de fonctionnement standard pendant une première partie du processus de fonctionnement, en mode de fonctionnement spécifique à la demande pendant une partie ultérieure du processus de fonctionnement du bras robotique et à nouveau en mode de fonctionnement standard pendant une dernière partie du processus de fonctionnement du bras robotique.

3. Bras robotique polyvalent (101) selon les revendications 1 ou 2, dans lequel le dispositif de commande de robot (102) est configuré pour commander le bras robotique polyvalent (101) dans le mode de fonctionnement spécifique à la demande uniquement lorsque l'outil robotique (430, 531) est actif.

4. Bras robotique polyvalent (101) selon l'une quelconque des revendications 1 à 3, dans lequel le mode de fonctionnement de la demande comprend en outre des instructions de fonctionnement spécifiques à l'outil.

5. Bras robotique polyvalent (101) selon l'une quelconque des revendications 1 à 4, dans lequel le dispositif de commande de robot (102) est configuré pour commander au moins l'une parmi les instructions de fonctionnement de base du second sous-ensemble, qui fait également partie du premier sous-ensemble d'instructions de fonctionnement de base, selon la valeur de fonctionnement de la demande.

6. Bras robotique polyvalent (101) selon l'une quelconque des revendications 1 à 5, dans lequel la valeur de fonctionnement de la demande d'un paramètre de fonctionnement de force est déterminée par l'établissement de force ou de couples de processus attendus appliqués par l'outil robotique (430, 531).

7. Bras robotique polyvalent (101) selon l'une quelconque des revendications 1 à 6, dans lequel le bras robotique polyvalent (101), avec un outil robotique (430, 531), dans un premier processus de fonctionnement du bras robotique, est commandé par un premier ensemble de valeurs de fonctionnement de la demande et dans un second processus de fonctionnement du bras robotique, est commandé avec un second ensemble de valeurs de fonctionnement de la demande.

8. Bras robotique polyvalent (101) selon l'une quelconque des revendications 1 à 7, dans lequel la valeur de fonctionnement de la demande est une valeur d'arrêt progressif, et dans lequel le dispositif de commande de robot (102) est configuré pour arrêter le fonctionnement du robot polyvalent en cas de franchissement de la valeur d'arrêt progressif.

9. Bras robotique polyvalent (101) selon l'une quelconque des revendications 1 à 8, dans lequel les valeurs de fonctionnement standard et les valeurs de fonctionnement de la demande sont prédéterminées pour une pluralité d'instructions de fonctionnement de base.

10. Bras robotique polyvalent (101) selon l'une quelconque des revendications 1 à 9, dans lequel les valeurs de fonctionnement standard et une pluralité de valeurs différentes de fonctionnement de la demande sont prédéterminées pour au moins une instruction de fonctionnement de base.

11. Bras robotique polyvalent (101) selon l'une quelconque des revendications 1 à 10, dans lequel les valeurs de fonctionnement des instructions de fonctionnement de base utilisées dans le mode de fonctionnement spécifique à la demande sont prédéterminées et, comparées aux valeurs de fonctionnement des mêmes instructions de fonctionnement de base utilisées dans le mode de fonctionnement standard, sont moins restrictives.

**12.** Bras robotique polyvalent (101) selon l'une quelconque des revendications 1 à 11, dans lequel les valeurs de fonctionnement utilisées dans le mode de fonctionnement standard sont protégées contre les modifications.

**13.** Bras robotique polyvalent (101) selon l'une quelconque des revendications 1 à 12, dans lequel les valeurs de fonctionnement peuvent être ajustées à l'intérieur d'une fenêtre prédéterminée définie par des valeurs seuils d'arrêt brutal.

**14.** Procédé de commande d'un bras robotique polyvalent (101) comprenant une pluralité d'articulations de robot (103) reliant une base de robot (105) et une bride d'outil de robot (107) dudit bras robotique polyvalent (101), ledit bras robotique polyvalent (101) comprend un dispositif de commande de robot (102) commandant le bras robotique polyvalent (101) dans un processus de fonctionnement de bras robotique, selon :

- un code de programme de premier niveau surveillant des valeurs de fonctionnement de paramètres de fonctionnement pendant le fonctionnement du bras robotique polyvalent (101), dans lequel la commande de premier niveau déclenche l'arrêt brutal du fonctionnement du bras robotique polyvalent (101) si une valeur de fonctionnement se situe en dehors d'une plage de sécurité prédéterminée,
- un code de programme de deuxième niveau commandant des mouvements de base du bras robotique polyvalent (101), selon des instructions de fonctionnement de base définies par lesdits paramètres de fonctionnement ayant des valeurs de fonctionnement standard, et
- un code de programme d'application de troisième niveau commandant les mouvements de base du bras robotique polyvalent (101), selon des instructions de fonctionnement de base définies par lesdits paramètres de fonctionnement ayant des valeurs de fonctionnement de la demande,

dans lequel, au cours d'une première partie du processus de fonctionnement du bras robotique, le bras robotique polyvalent (101) est commandé par le code de programme de deuxième niveau au moyen d'une pluralité d'instructions de fonctionnement de base définies par les valeurs de fonctionnement standard,

dans lequel, au cours de la première partie du processus de fonctionnement du bras robotique, le bras robotique polyvalent est commandé dans un mode de fonctionnement standard selon un premier sous-ensemble d'instructions de fonctionnement de base définies par un ou plusieurs paramètres de fonctionnement ayant des valeurs de fonctionnement standard,

dans lequel, au cours d'une seconde partie du processus de fonctionnement du bras robotique, le bras robotique polyvalent (101) est commandé par le code de programme de la demande de troisième niveau,

dans lequel, au cours de la seconde partie du processus de fonctionnement du bras robotique, le bras robotique polyvalent est commandé dans un mode de fonctionnement spécifique à la demande selon un second sous-ensemble d'instructions de fonctionnement de base définies par un ou plusieurs paramètres de fonctionnement ayant des valeurs de fonctionnement spécifiques à la demande,

dans lequel le code de programme d'application de troisième niveau est déterminé par une propriété souhaitée du fonctionnement du bras robotique polyvalent (101) dans le mode de fonctionnement spécifique à la demande,

dans lequel la propriété souhaitée est déterminée par un outil robotisé (430, 531) monté sur la bride de l'outil robotisé (107), ce qui permet d'ajuster une fenêtre de fonctionnement autorisée pour un certain paramètre de fonctionnement,

dans lequel une fenêtre de fonctionnement correspond aux valeurs d'une gamme de paramètres de fonctionnement définissant les limites du fonctionnement du bras robotique

dans lequel, pendant la première et la seconde partie du processus de fonctionnement du bras robotique, le bras robotique est en outre surveillé par le code de programme de premier niveau.

**15.** Procédé de commande d'un bras robotique polyvalent (101) selon la revendication 14, dans lequel le procédé comprend une étape de pré-fonctionnement consistant à définir une valeur pour un ou plusieurs paramètres de fonctionnement définissant une fenêtre de fonctionnement utilisée par le dispositif de commande du robot lors du fonctionnement du bras robotique dans le mode de fonctionnement spécifique à la demande.

**FIG. 1**

**FIG. 2**

Plurality of basic
motion commands

1. Basic (forward) motion command
2. Basic (backward) motion command    First subset
3. Basic (up) motion command
4. Basic (waypoint) motion command
5. Basic (home) motion command    Second subset

N. Basic (NN) motion command

Robot arm
operation process

| Move | Work | Move | Work | Move |
| --- | --- | --- | --- | --- |
| First subset | Second subset | First subset | Second subset | First subset |

**FIG. 3**

Basic forward
motion command

401

403

407

405

430

Obj.1

Obj.2

Start

End

Tool activated

**FIG. 4**

501

Basic down
motion command

503

507

530

505

531

Obj.

Tool not activated

Tool activated

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016161937 A
- EP 3381623 A
- US 2018043549 A
- WO 2014110682 A1
- US 4763531 A
- US 2015204742 A